# EUROPEAN PATENT SPECIFICATION

(11) **EP 3 627 789 B1**
(45) Date of publication and mention of the grant of the patent: **09.10.2024**
(21) Application number: 18195369.6
(22) Date of filing: 19.09.2018
(51) Int. Cl.: H04L 9/40, H04L 9/00, H04L 9/08, H04L 9/32, G06Q 20/36, G06Q 20/22, G06Q 20/40, G06Q 20/06, G06Q 20/38

(54) **INFORMATION PROCESSING DEVICES AND METHODS**
INFORMATIONSVERARBEITUNGSVORRICHTUNGEN UND -VERFAHREN
DISPOSITIFS ET PROCÉDÉS DE TRAITEMENT D'INFORMATIONS

(43) Date of publication of application: 25.03.2020
(73) Proprietor: Vocalink International Limited, London EC4R 3AB (GB)
(72) Inventor: COLE, Michael, Amersham, Buckinghamshire HP6 6UR (GB)
(74) Representative: Gill Jennings & Every LLP

(56) References cited:
- WO-A1-2017/139112
- WO-A1-2017/139688
- US-A1- 2018 075 453

## Description

### BACKGROUND

### Field of the Disclosure

The present disclosure relates to information processing devices and methods.

### Description of the Related Art

The "background" description provided herein is for the purpose of generally presenting the context of the disclosure. Work of the presently named inventor, to the extent it is described in the background section, as well as aspects of the description which may not otherwise qualify as prior art at the time of filing, are neither expressly or impliedly admitted as prior art against the present disclosure.

Modern data processing networks often contain a plurality of types of separate data processing entities. These separate data processing entities may have similar purposes. However, they may use different data formats and process data in different ways, making it difficult for a single data processing operation requiring more than one separate data processing system to be implemented efficiently.

In such cases, it may be necessary for an end user to break up the data processing operation into a plurality of sub-data processing operations, each sub-data processing operation being implemented by a different respective one of the separate data processing entities. For example, the end user may have to implement a first sub-data processing operation using a first data processing entity and, separately, implement a second sub-data processing operation at a second data processing entity. This results in increased complexity for the end user and more intensive processing at a device operating by the end user. The end user must also account for the fact that the first and second sub-data processing operations relate to a single data processing operation and that a result of the second sub-data processing operation may therefore depend on a result of the first sub-data processing operation. Accounting for the relationship between the sub-data processing operations in this way further increases the complexity and necessary processing. In addition, since the process relies on the end user to account for the relationship between the sub-data processing operations, there is a risk of errors being introduced.

There is a need to alleviate these problems.

Prior Art Includes: WO 2017/139112A1, US 2018/075453A1, WO 2017/139688A1.

### SUMMARY

The present disclosure is defined by the claims.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figures 1A and 1B schematically show, respectively, first and second information processing devices according to embodiments;
Figure 2 schematically shows an operation of the first information processing device;
Figure 3 schematically shows a first data processing operation according to an embodiment;
Figure 4 schematically shows a second data processing operation according to an embodiment;
Figure 5 schematically shows a third data processing operation according to an embodiment;
Figure 6 schematically shows a fourth data processing operation according to an embodiment;
Figure 7 schematically shows a fifth data processing operation according to an embodiment;
Figure 8 schematically shows an example data processing operation comprising a plurality of shared ledgers;
Figure 9 schematically shows a first method carried out by the second information processing device, according to an embodiment;
Figure 10 schematically shows a first method carried out by the first information processing device, according to an embodiment;
Figure 11 schematically shows a second method carried out by the first information processing device, according to an embodiment;
Figure 12 schematically shows a second method carried out by the second information processing device, according to an embodiment; and
Figure 13 schematically shows a third method carried out by the second information processing device, according to an embodiment.

### DESCRIPTION OF THE EMBODIMENTS

Referring now to the drawings, wherein like reference numerals designate identical or corresponding parts throughout the several views.

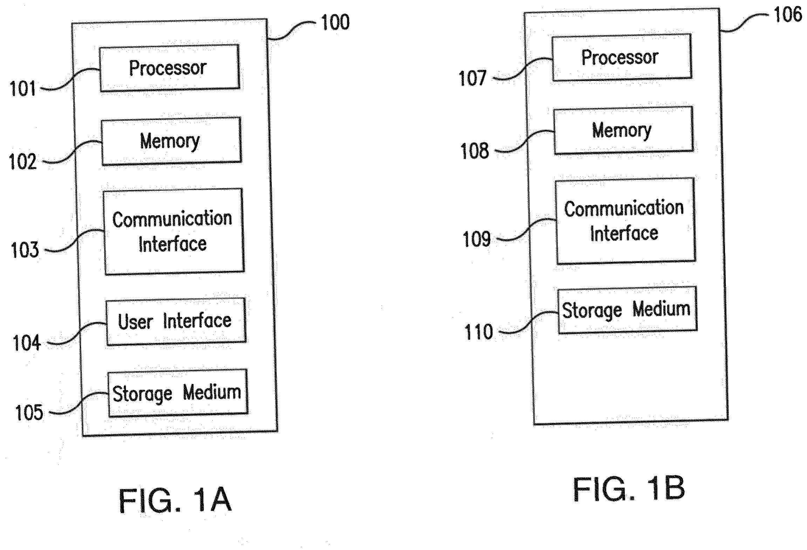

Figures 1A and 1B show, respectively, a first information processing device 100 and a second information processing device 106, according to an embodiment.

The first information processing device 100 comprises a processor 101 for processing electronic instructions, a memory 102 for storing the electronic instructions to be processed and input and output data associated with the electronic instructions, a communication interface 103 for sending electronic information to and/or receiving electronic information from one or more other information processing devices, a user interface 104 (e.g. in the form of a touch panel display or the like) for outputting information to a user and/or receiving input from a user and a storage medium 105 (e.g. in the form of a hard disk drive, solid state drive, tape drive or the like) for long term storage of electronic information. Each of the processor 101, memory 102, communication interface 103, user interface 104 and storage medium 105 are implemented using appropriate circuitry, for example. The processor 101 controls the operation of each of the memory 102, communication interface 103, user interface 104 and storage medium 105.

The second information processing device 106 comprises a processor 107 for processing electronic instructions, a memory 108 for storing the electronic instructions to be processed and input and output data associated with the electronic instructions, a communication interface 109 for sending electronic information to and/or receiving electronic information from one or more other information processing devices and a storage medium 110 (e.g. in the form of a hard disk drive, solid state drive, tape drive or the like) for long term storage of electronic information. Each of the processor 107, memory 108, communication interface 109 and storage medium 110 are implemented using appropriate circuitry, for example. The processor 107 controls the operation of each of the memory 108, communication interface 109 and storage medium 110.

In the following example embodiments, the first and second information processing devices 100 and 106 are implemented to help conduct data processing operations implemented using a first data processing entity in the form of one of a banking system or shared ledger network and a second data processing entity in the form of one of a banking system or shared ledger network. The present technique helps alleviate problems associated with using such different payments processing systems (as different data processing entities). It will be appreciated that these are only examples, however, and that the first or second data processing entity may be any other type of data processing entity. A data processing entity (also known as an information processing entity) is, in general, a computer or network of computers for the storage and processing of a predetermined type of data in a predetermined format according to one or more predetermined rules. The differences in the predetermined data type, data format and rules of different data processing entities make it difficult for data processing operations requiring the use of a plurality of different data processing entities to be implemented efficiently.

In the case of different data processing entities being different respective payments processing systems (e.g. one being a banking system and one being a shared ledger network) that need to cooperate to process a payment, a particular problem is that it is insecure (for reasons of fraud or error being so easily possible) to rely on the end user to perform this coordination. This creates a problem of how different payments processing systems processing different types of currency (e.g. traditional bank money and proposed forms of digital currency) could work together securely and seamlessly within a single digital economy. Furthermore traditional payments systems typically require stakeholders (e.g. banks) to maintain pools of liquidity to cover clearing and settlement. These represent a significant investment by such entities in the payments system. An economy operating with bank money payments processing systems and proposed digital currency systems would seem to require additional liquidity pools for each type of service. This potentially requires a separate liquidity pool to be provided for each form (bank and digital, for example) of the same currency. The present technique helps to alleviate these problems.

In embodiments, a banking system comprises proprietary electronic system(s) implemented at each of a plurality of banks for recording and changing an amount of funds contained within bank accounts associated with that bank. It may also comprise an interbank network allowing the transfer of funds from a first bank account held at a first one of the plurality of banks to a second bank account held at a second one of the plurality of banks. Such interbank networks may be implemented using Bacs ^{®}, Faster Payments Service and Immediate Payments Solution provided by VocaLink ^{®}, for example. Thus, any change to the amount of funds contained within a bank account held at one of the plurality of banks is implemented by the banking system. This is the case for changes to account holder funds resulting from operations internal to a bank (e.g. debiting of funds when a bank account holder pays for bank services, crediting of funds to a bank account holder in order to make interest payments or if the bank account holder takes out a loan from the bank or a transfer of funds from one bank account holder to another bank account holder at the same bank) or from operations involving more than one bank via the interbank network (e.g. a transfer of funds from a first account holder at a first bank to a second account holder at a second, different, bank). The crediting of, debiting of and transfer of funds between bank accounts in a banking system is known in the art and is therefore not discussed in detail here.

It is noted that interbank networks are closed systems because only banks (or, more generally, financial institutions) which meet certain criteria (laid down by governments, for example) are allowed to be a party to the interbank network. Funds may therefore be transferred between account holders using the interbank network only for account holders holding accounts at banks which meet these requirements (and hence form part of the interbank network). Furthermore, the account holders are reliant on the members of the interbank network to process the transfer of funds correctly. This is because the account holders themselves are not part of the interbank network and must therefore instruct a member of the network (i.e. their bank) to process the transfer of funds on their behalf.

A shared ledger network is a network of computers (nodes, not shown) each storing their own respective copy of an electronic ledger (in this sense, the ledger is shared). Changes to the electronic ledger can only be made with the consensus of the nodes storing a copy of the electronic ledger (according to a predetermined consensus condition, e.g. all nodes agree to the change, the majority of nodes agree to the change, a predetermined proportion or number of the nodes agree to the change, or the like). Unlike an interbank network, some shared ledger networks allow anyone (not just permissioned organisations, such as a bank) to access the network. End users therefore may not have to rely on another party (i.e. their bank) to correctly implement a transfer of funds to another user. Rather, users may directly implement the transfer of funds on the ledger themselves. Whether the transfer of funds is implemented directly by the user, or indirectly via (for example) their bank, if the predetermined consensus condition for this transfer is met, this transfer is accepted by the shared ledger network and all nodes update their respective copy of the shared ledger. This update will reflect the success or failure of the transfer, which will depend on business rules for the transfer (for example, requiring funds being available at the transfer source). Methods of implementing a shared ledger and updating the shared ledger by consensus are known in the art and will therefore not be discussed in detail here.

A banking system and a shared ledger network (which are examples of different payments processing systems) are thus two separate data processing entities which have the same purpose, namely the transfer of funds from one party to another. However, as is clear from the above explanations, the ways in which this transfer of funds (which is a data processing operation) is implemented for each of these entities is very different. In a banking system, funds are transferred from a bank account of a first user at a first bank to a bank account of a second user at a second bank via the proprietary system(s) implemented at those bank(s) and/or the closed interbank network. Both the paying and receiving users rely on the first and second banks to process the transaction correctly. On the other hand, with the shared ledger network, funds are transferred directly from the first user to the second user via a line which is added to the shared ledger. As long as the consensus condition for the shared ledger network is met, and the consensus is such that the transaction is successful, this line will then be added to all copies of the shared ledger held on the network. This allows there to be no reliance by the users on any single third party (e.g. a bank) to get the transfer of funds correct, because it is the sending user themselves who initiates the transaction and the validity of this transaction is confirmed by consensus amongst potentially many third parties operating the nodes of the shared ledger network.

It is noted that a further difference between a banking system and a shared ledger network is that a banking system tracks the transfer of bank money that needs to be cleared and then settled, whereas a shared ledger network tracks amounts of digital currency (e.g. a fiat digital currency).

Because of the different ways in which a transfer of funds is implemented and accounted for by a banking system and by a shared ledger network, it is difficult to instruct a cross data processing entity payment (e.g. a payment from a bank account to a party on a shared ledger or vice versa). This difficulty is alleviated by embodiments of the present disclosure.

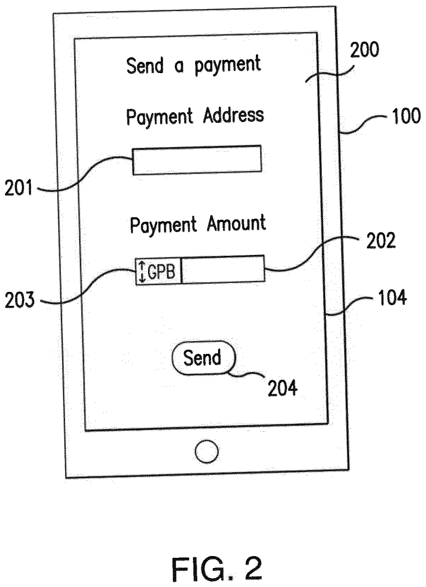

In an embodiment, the present technique allows payment from a bank account to a party on a shared ledger, payment from a party on a shared ledger to a bank account, payment from a bank account to another bank account (via the interbank network or via the shared ledger network) and payment from a party on a shared ledger to another party on a shared ledger using a single, efficient procedure implemented by a user of the first information processing device 100. This is exemplified in Figures 2 to 7.

Figure 2 shows an example of the first information processing device 100 when used to initiate a transfer of funds. In this example, the first information processing device 100 is a smartphone and the user interface 104 is a touch panel display. The functionality of the first information processing device is implemented on the smartphone using a suitable software application ("app") executable by the processor 101.

In order to initiate a transfer of funds, the touch panel display displays a screen 200 comprising a first box 201 for the user to enter a destination address of the funds to be transferred and a second box 202 for the user to enter an amount of a given currency (e.g. US dollars (USD), Euros (EUR), Sterling (GBP)) to be transferred to the destination address. The second box 202 comprises a drop down menu 203 for selection of the currency to be transferred. Each of the destination address and currency amount is entered by the user via an on-screen keyboard (not shown) or the like, for example.

The destination address entered in first box 201 comprises first information indicating a bank (in the case that the destination is a bank account) or a shared ledger (in the case that the destination is a party of a shared ledger) and second information indicating a bank account of the bank indicated by the first information (in the case that the destination is a bank account) or party of the shared ledger indicated by the first information (in the case that the destination is a party of a shared ledger). The term "party of a shared ledger" should be understood to be a party who is able to send funds to and receive funds from other parties using the shared ledger (wherein each transfer of funds is recorded on a line of the shared ledger which identifies the sending party, receiving party and amount of funds transferred).

For example, all banks which are part of the banking system may be associated with a unique bank identifier (e.g. international sort code) and all accounts of a particular bank may be associated with a unique account identifier (e.g. account number) unique to that bank. The combination of the unique bank identifier and unique account identifier provides a unique bank account address within the banking system to which funds can be sent. Similarly, for example, all shared ledgers on a shared ledger network may be associated with a unique ledger identifier (e.g. unique ledger number) and each party to a particular shared ledger may be associated with a unique party identifier (unique party number) unique to that shared ledger. The combination of the unique ledger identifier and unique party identifier provides a unique shared ledger address within the shared ledger network to which funds can be sent.

Prior to displaying the screen 200, the user, using the app, is able to configure a source address from which funds are to be transferred. Like the destination address, the source address comprises first information indicating a bank (in the case that the source is a bank account) or a shared ledger (in the case that the source is a party of a shared ledger) and second information indicating a bank account of the bank indicated by the first information (in the case that the source is a bank account) or party of the shared ledger indicated by the first information (in the case that the source is a party of a shared ledger). The configuration of the source address requires the user to enter suitable credentials to the app to prove that they are authorised to transfer funds from the source address (e.g. username and password for accessing an online bank account or for accessing a private key used for generating a digital signature necessary for validly adding transfers of funds away from a party on a shared ledger). The app is able to communicate with a bank of the banking system or a node of the shared ledger network via a suitable application programming interface (API) provided by the bank or shared ledger node, for example.

An example destination or source address format is X.Y (in which X is the first information and Y is the second information). This may be referred to as a two part address (the first information being the first part and the second information being the second part). In an alternative embodiment, the destination or source address may be in the form of a proxy address (e.g. email address, social media username, telephone number or the like) which is uniquely associated with a respective two part address. In the case of a proxy address, a database relating proxy addresses and two part addresses may be accessible to the app so as to allow a user to transfer funds from the app using only the proxy address. The database may be stored on a network accessible to the first information processing device 100, for example. When a proxy address is used, the app first looks up the proxy address in the database to find the two part address. The app then transfers the funds using the two part address.

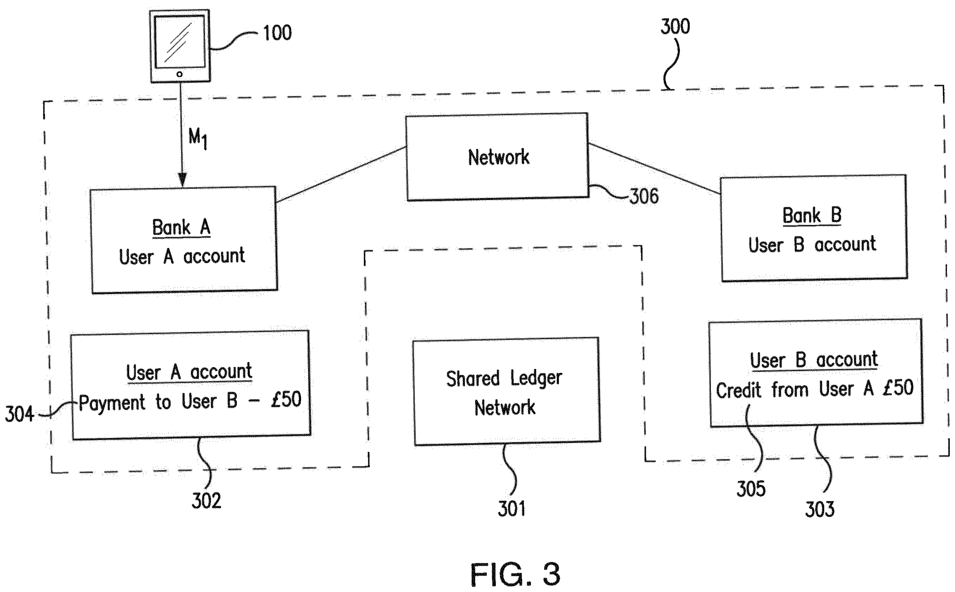

Once the user has entered a payment address, selected a payment currency and entered a payment amount, the user touches the send virtual button 204. Depending on the type of source address and type of destination address (the address type indicating the data processing entity with which the address is associated, i.e. either the banking system or the shared ledger network, in this case), one of the processes illustrated in Figures 3 to 7 is then carried out.

In the following embodiments, the banking system is denoted by reference 300 and comprises the banks (in particular, the proprietary electronic system(s) implemented at the banks) and the interbank network 306. The shared ledger network is denoted by reference 301.

Figure 3 shows a first example in which funds are transferred from a first bank account of a first user (User A) at a first bank (Bank A) to a second bank account of a second user (User B) at a second bank (Bank B). In this case, the app controls the device 100 to transmit a single message M₁ to Bank A (in particular, an information processing apparatus (not shown) controlled by Bank A) instructing the transfer of funds from the first bank account to the second bank account via the interbank network 306. The message M₁ takes the form of a payment request message in a format associated with the banking system 300 and comprises the two part address of the first bank account (as the source address), the two part address of the second bank account (as the destination address), the currency type of the transfer and the amount of the transfer. When it is received by Bank A, it is processed by the banking system 300. Upon successful processing of the message M₁, the completed transfer is recorded as a debit 304 of the first bank account 302 and a corresponding credit 305 of the second bank account 303. In this case, the debit and corresponding credit is £50, thereby resulting in a transfer of £50 from the first bank account to the second bank account. Following successful processing of the message M₁, Bank A may transmit a successful response message (not shown) back to the device 100 indicating the successful transfer of funds.

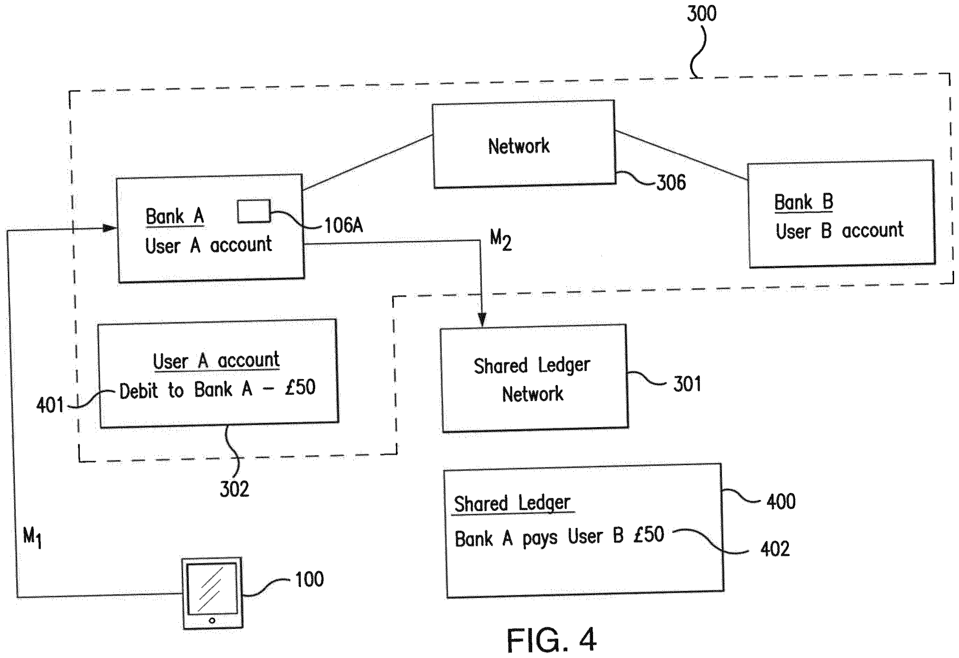

Figure 4 shows a second example in which funds are transferred from a bank account of a first user (User A) at a first bank (Bank A) to a second user (User B) who is a party of a shared ledger 400 of the shared ledger network 301. In this case, Bank A is also a party of the shared ledger 400. In this case, the app controls the device 100 to transmit a first message M₁ to a first instance of the information processing device 106 (denoted 106A) controlled by Bank A. The message M₁ comprises the two part address of User A's bank account (as the source address), the two part address of User B on the shared ledger 400 (as the destination address), the currency type of the transfer and the amount of the transfer. In response to the first message M₁, the device 106A instructs the banking system 300 (in particular, an information processing apparatus (not shown) controlled by Bank A) to debit funds from User A's bank account. This is recorded as a debit 401 of User A's bank account. Furthermore, the device 106A transmits a second message M₂ to a node of the shared ledger network 301 instructing a transfer of funds from Bank A to User B on the shared ledger 400. This transfer is recorded as line 402 on the shared ledger 400. The message M₂ comprises the two part address of Bank A on the shared ledger 400 (as the source address), the two part address of User B on the shared ledger 400 (as the destination address), the currency type of the transfer and the amount of the transfer. In an embodiment, the two part address of Bank A on the shared ledger is published by Bank A in advance and is stored in the storage medium 110 of device 106A (e.g. in the form of a database relating the unique bank identifier of Bank A (included in the source address of message M₁) with a two part shared ledger address for Bank A on the shared ledger 400). Once messages M₁ and M₂ have been successfully processed (resulting in the debit 401 of User A's bank account and a corresponding transfer 402 of funds from Bank A to User B on the shared ledger 400), the transfer is complete.

Thus, in response to a single message M₁ transmitted by the device 100 (in response to the user touching the virtual send button 204), a transfer of funds (in this case, £50) from a bank account to a party of a shared ledger has been completed. This is despite the fact that the banking system 300 (necessary for bank account to bank account fund transfers) and the shared ledger network 301 (necessary for shared ledger fund transfers) are completely separate data processing entities (one tracking bank currency and the other tracking digital currency). A user is thus provided with an efficient, easy to use experience. Furthermore, since all the device 100 must do is send a single message M₁ and receive a single response message (see below), the processing required by the device 100 is reduced. In the case that the device 100 is a battery operated device such as a smartphone, this helps to reduce power consumption and increase battery life.

In the above-mentioned embodiment, a successful response message (not shown) is transmitted in response to each of the messages M₁ and M₂ once each process associated with that message has been successfully completed. In particular, a successful response message to M₁ is transmitted from the device 106A to the device 100 following successful debiting of funds from user A's bank account and receipt of a successful response message to M₂. The response message to M₂ is transmitted from a node of the shared ledger network 301 to the device 106A following a successful transfer of funds from Bank A to User B on the shared ledger 400. The entire funds transfer process is thus carried out without the need for human intervention or additional requests from the device 100. The risk of errors being introduced in the funds transfer is therefore alleviated.

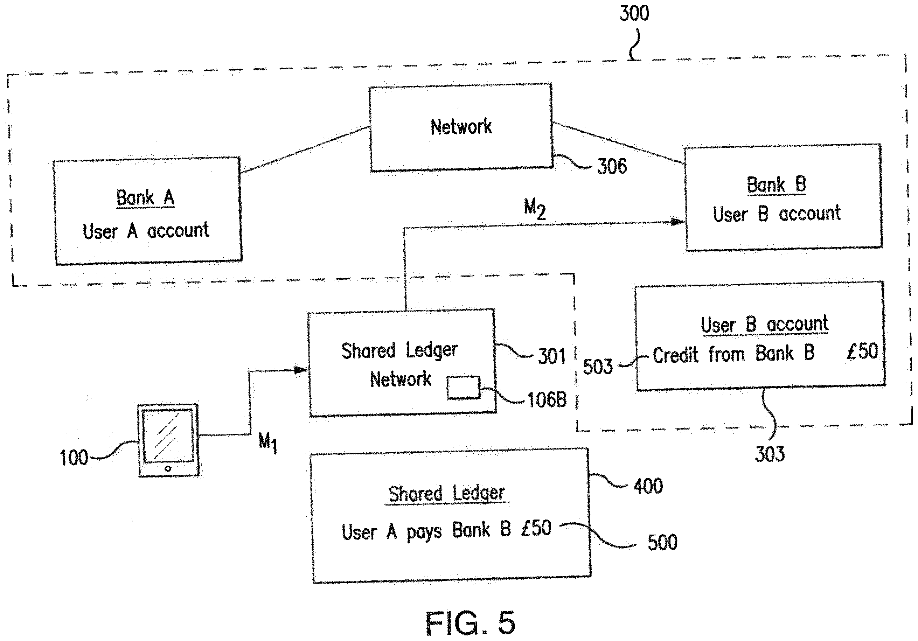

Figure 5 shows a third example in which funds are transferred from a first user (User A) who is a party of a shared ledger 400 of the shared ledger network 301 to a bank account of a second user (User B) at a second bank (Bank B). In this case, the app controls the device 100 to transmit a first message M₁ to a second instance of information processing device 106 (denoted 106B) controlled by the shared ledger network 301 (e.g. the device 106B may be implemented within one or more of the nodes of the shared ledger network 301). The message M₁ comprises the two part address of User A on the shared ledger 400 (as the source address), the two part address of User B's bank account (as the destination address), the currency type of the transfer and the amount of the transfer. In response to the first message M₁, the device 106B instructs the shared ledger network 301 to implement a transfer of funds from User A to Bank B on the shared ledger 400. This is recorded as line 500 on the shared ledger 400. In an embodiment, the two part address of Bank B on the shared ledger is published by Bank B in advance and is stored in the storage medium 110 of device 106B (e.g. in the form of a database relating the unique bank identifier (included in the destination address of message M₁) of Bank B with a two part shared ledger address for Bank B on the shared ledger 400). Furthermore, the device 106B transmits a second message M₂ to Bank B (in particular, an information processing apparatus (not shown) controlled by Bank B) instructing Bank B to credit a bank account of User B. This is recorded as a credit 503 of User B's bank account 303. The message M₂ comprises the two part address of User B's bank account (as the destination address), the currency type of the transfer and the amount of the transfer. Once messages M₁ and M₂ have been successfully processed (resulting in a transfer of funds 500 from User A to Bank B on the shared ledger 400 and a corresponding credit 503 of User B's bank account 303), the transfer is complete.

Thus, in response to a single message M₁ transmitted by the device 100 (in response to the user touching the virtual send button 204), a transfer of funds (in this case, £50) from a party of a shared ledger to a bank account has been completed. This is despite the fact that the banking system 300 (necessary for bank account to bank account fund transfers) and the shared ledger network 301 (necessary for shared ledger fund transfers) are completely separate data processing entities (one tracking bank currency and the other tracking digital currency). A user is thus provided with an efficient, easy to use experience. Furthermore, since all the device 100 must do is send a single message M₁ and receive a single response message (see below), the processing required by the device 100 is reduced. In the case that the device 100 is a battery operated device such as a smartphone, this helps to reduce power consumption and increase battery life.

In the above-mentioned embodiment, a successful response message (not shown) is transmitted in response to each of the messages M₁, M₂ once each process associated with that message has been successfully completed. In particular, a successful response message to M₁ is transmitted from the device 106B to the device 100 following a successful transfer of funds from User A to Bank B on the shared ledger 400 and receipt of a successful response message to M₂. The successful response message to M₂ is transmitted from Bank B to the device 106B following a successful crediting of funds to User B's bank account. The entire funds transfer process is thus carried out without the need for human intervention. The risk of errors being introduced in the funds transfer is therefore alleviated.

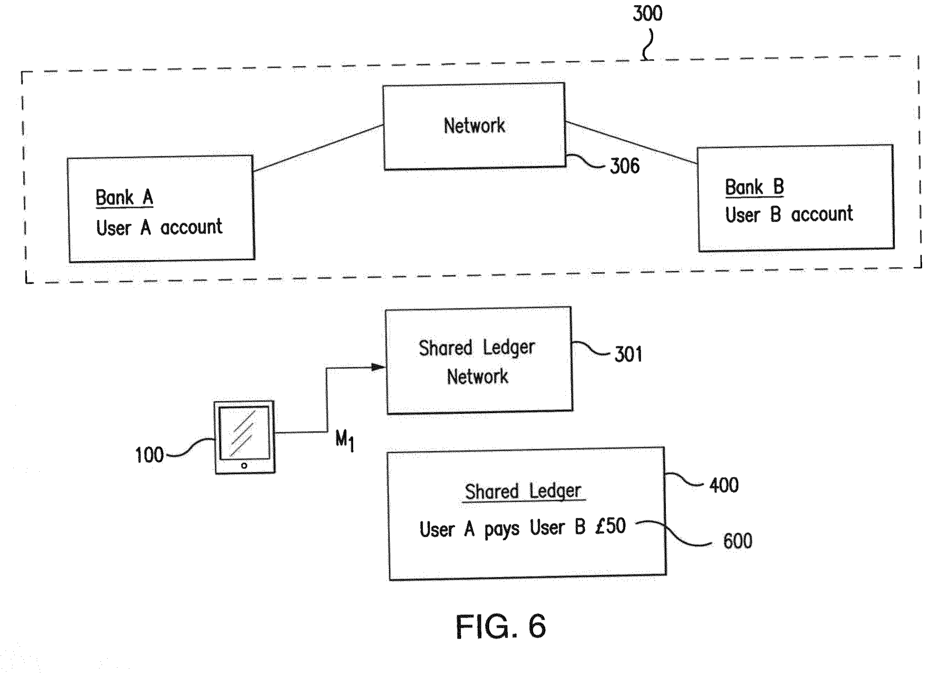

Figure 6 shows a fourth example in which funds are transferred from User A to User B via the shared ledger network 301. In this case, the app controls the device 100 to transmit a single message M₁ to a node of the shared ledger network 301 instructing the transfer of funds from User A to User B on the shared ledger 400. This is added as a line 600 on the shared ledger 400. The message M₁ comprises the two part address of User A on the shared ledger 400, the two part address of User B on the shared ledger 400, the currency type of the transfer and the amount of the transfer. In this case, the transfer of £50 from User A to User B is transmitted entirely via the shared ledger network 301. Following successful processing of the message M₁, the shared ledger network may transmit a response message (not shown) back to the device 100 indicating the successful transfer of funds.

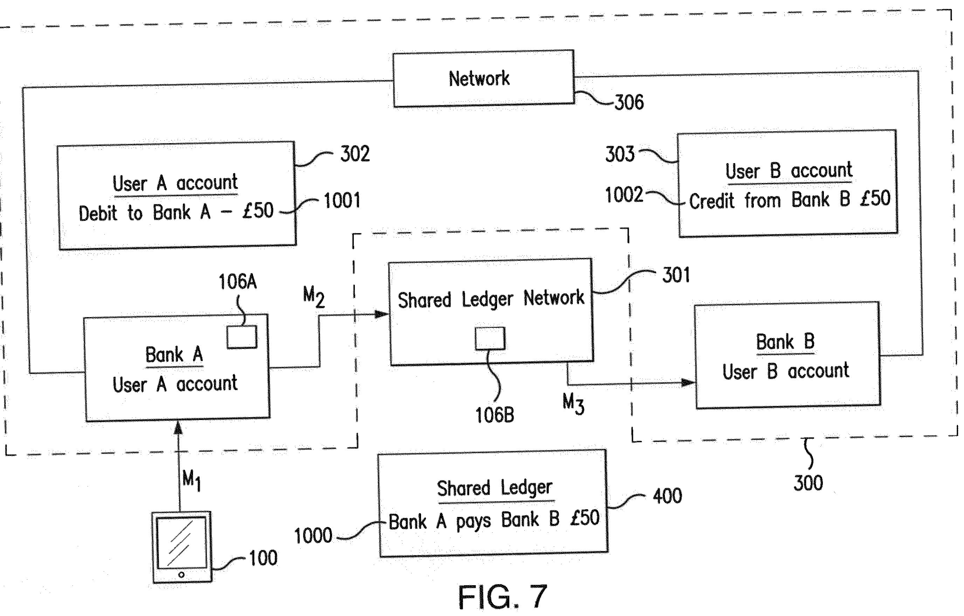

Figure 7 shows a fifth example in which a payment can be made from a bank account 302 for a User A at a Bank A to another bank account 303 for a User B at a Bank B via the shared ledger network 301 rather than via the interbank network 306. In this case, the device 100 sends the information processing device 106A controlled by Bank A a first message M₁ comprising the two-part address of User A's bank account 302 as the source address, the two-part address of User B's bank account 303 as the destination address, the payment amount and the payment currency.

On receiving the first message M₁, the device 106A instructs the banking system 300 to debit funds from User A's bank account 302 by the amount indicated in the message M₁. This is recorded as a debit 1001 of User A's bank account 302. The device 106A then composes a second message M₂ and transmits this to the information processing device 106B controlled by the shared ledger network 301.

The message M₂ requests a payment to User B's account 303 at Bank B and comprises the two-part address of Bank A on the shared ledger 400 as the source address, the two-part address of User B's bank account 303 as the destination address, the currency type of the transfer and the amount of the transfer. In an embodiment, the two part address of Bank A on the shared ledger is published by Bank A in advance and is stored in the storage medium 110 of device 106A (e.g. in the form of a database relating the unique bank identifier of Bank A (included in the source address of message M₁) with a two part shared ledger address for Bank A on the shared ledger 400). In response to the second message M₂, the device 106B instructs the shared ledger network 301 to implement a transfer of funds from Bank A to Bank B on the shared ledger 400. This is recorded as a line 1000 on the shared ledger 400. In an embodiment, the two part address of Bank B on the shared ledger is published by Bank B in advance and is stored in the storage medium 110 of device 106B (e.g. in the form of a database relating the unique bank identifier of Bank B (included in the destination address of message M₂) with a two part shared ledger address for Bank B on the shared ledger 400).

The device 106B then sends a third message M₃ to Bank B (in particular, an information processing apparatus (not shown) controlled by Bank B) instructing Bank B to credit User B's bank account 303. This is recorded as a credit 1002 of User B's bank account 303. The message M₃ comprises the two-part address of User B's bank account (as the destination address), the currency type of the transfer and the amount of the transfer.

Once messages M₁, M₂ and M₃ have been successfully processed (resulting in a debit 1001 of User A's bank account 302 at Bank A, a corresponding transfer of funds 1000 from Bank A to Bank B on the shared ledger 400 and a corresponding credit 1002 of User B's bank account 303 at Bank B), the transfer is complete.

In the above-mentioned embodiment, a successful response message (not shown) is transmitted in response to each of the messages M₁, M₂ and M₃ once each process associated with that message has been successfully completed. In particular, a successful response message to M₁ is transmitted from the device 106A to the device 100 following a successful debiting of funds from User A's bank account 302 and receipt of a successful response message to M₂. The successful response message to M₂ is transmitted from the device 106B to the device 106A following a successful transfer of funds from Bank A to Bank B on the shared ledger 400 and receipt of a successful response message to M₃. The successful response message to M₃ is transmitted from Bank B to the device 106B following a successful crediting of funds to User B's bank account 303.

Thus, the response message to message M₃ indicates the success (or otherwise) of crediting User B's bank account. The device 106B of the shared ledger network 301 receives this response and, if it is a successful response message, transmits a successful response message to message M₂. If it is a non-successful response message (indicating a non-successful crediting of User B's bank account, e.g. due to a technical problem at Bank B), then the device 106B instructs the shared ledger network 301 to reverse the payment it performed from Bank A to Bank B (thereby sending the funds back from Bank B to Bank A on the shared ledger 400). The device 106B then sends a non-successful response message to message M₂ to the device 106A of Bank A. The device 106A at Bank A receives the response to message M₂ from the device 106' of the shared ledger network 301. If the response to message M₂ is a successful response message, then the device 106A returns a successful response message to message M₁ to the device 100. If the response to message M₂ is a non-successful response message, then the device 106A instructs Bank A to re-credit User A's bank account 302 with the funds previously debited (at debit 1001) and transmits a non-successful response message to message M₁ to the device 100. The device 100 can therefore display the failure or success of the payment overall.

By allowing bank to bank transfers to be made with the shared ledger network 301 (rather than the interbank network 306), it is possible for the shared ledger network 401 to handle all forms of payment: from digital fiat currency (on a shared ledger) to bank fiat currency (in a bank account); from bank fiat currency (in a bank account) to digital fiat currency (on a shared ledger); from bank fiat currency (in a bank account) to bank fiat currency (in a bank account) and from digital fiat currency (on a shared ledger) to digital fiat currency (on a shared ledger). The role of the interbank network 306 can therefore be retired, thereby allowing the entire payments system to work via the shared ledger network 301. Less computer system infrastructure is therefore needed overall (i.e. that used by the interbank network 306 is no longer required) and all banks in the system (e.g. Bank A and Bank B) need only provide a liquidity pool for operating via shared ledger network 301 (rather than also provide liquidity for the traditional clearing and settlement operations associated with the interbank network 306).

Alternatively, in the case that both the interbank network 306 and shared ledger network 301 are maintained, it can be left to the information processing device 106A at Bank A to determine whether the payment to an account in Bank B is best achieved via the interbank network 306 or via the shared ledger network 301. Thus, neither the device 100 nor its end user need to decide between these two options (or to even be aware of them). The processing required by the device 100 is therefore reduced (thereby reducing power consumption and increasing battery life for the device 100 when the device 100 is a battery operated device such as a smartphone) and the end user experience is improved. The selection of either the interbank network 306 or shared ledger network 301 may depend on network traffic, for example, so that a payment is routed to the one of the interbank network 306 and shared ledger network 301 with the least network traffic, thereby making more efficient use of network resources. In this case, all messages transmitted to Bank A are first transmitted to the device 106A controlled by Bank A and the device 106A then determines the data processing entity (i.e. banking system 300 or shared ledger network 301) to implement the transfer of funds associated with the message.

As previously discussed with reference to the example of Figure 7, if, for any reason, there is a problem with a part of the process, the part of the process can be identified and all parts of the process up to that point can be cancelled. This is due to the use of the messages M₁, M₂ and (where present) M₃ and their respective responses. Each of the messages M₁, M₂ and (where present) M₃ have an associated response message which indicates success (a successful response message) or failure (a non-successful response message or failure response message) in the case that the processing of that message succeeds or fails, respectively. In the case that no response message is received within a predetermined time period (a time out period), this is interpreted in the same way as a failure response message. A failure response message (or lack of responses message within the time out period) allows the part of the payment process (i.e. whether it is the part associated with message M₁, M₂ or (where present) M₃) which has experienced the failure to be identified and results in a failure response being issued for all previous messages in the payment process. Successful previous parts of the payment process associated with each the previous messages can then be cancelled (where necessary).

For example, in Figure 4, if, after the debit 401 of User A's bank account, there is a problem with the shared ledger network 301 meaning that it cannot complete the transfer 402 from Bank A to User B, Bank A will not receive a successful response to message M₂. Rather, it will receive a non-successful response message to M₂ or will receive no response message to M₂. Upon receiving a non-successful response message to M₂ or after receiving no response message to M₂ within a predetermined time out period, Bank A re-credits the debited £50 to User A's bank account and transmits an error message back to the device 100 (a non-successful response message to message M₁) indicating that the transaction could not be completed due to an error of the shared ledger network 301. In another example, in Figure 5, if, after the transfer 500 of £50 from User A to Bank B and the transmission of message M₂ to Bank B to credit the account of User B, the Bank B discovers that it does not hold such an account then, then it will return an error response to the shared ledger network 301 which reverses the transfer it performed to credit Bank B. The shared ledger network 301 then returns an error message to the device 100.

It will be appreciated that these are just examples, and that the use of messages M₁, M₂ and (where present) M₃ to initiate different respective stages of a fund transfer (together with the respective responses of these messages) allows one stage to be completed prior to initiating a subsequent stage depending on that former stage and allowing a problem with a fund transfer to be narrowed down to a particular stage of the fund transfer (thereby allowing the preceding stages to be cancelled). This provides for a robust method of allowing fund transfers using the separate data processing entities of the banking system 300 and shared ledger network 301. In particular, it provides for a robust method of accounting for transfers of currency between parties when those parties hold currency in different respective forms (e.g. one party holds bank fiat currency in a conventional bank account and the other party holds digital fiat currency on a shared ledger), since the processes enabling this transfer are comprised within a transaction which either successes completely or fails completely (meaning that all funds, whether in bank fiat currency or digital fiat currency) are accounted for.

In an embodiment, in order to provide security to the system, each message M₁ and M₂ (and associated response) is digitally signed by the party sending it.

In an embodiment, the shared ledger network 301 hosts a plurality of shared ledgers. Although the above-mentioned embodiments relate to the transfer of funds from one party to another on a single shared ledger, it is also possible that one party is a party of a first shared ledger and the other party is a party of a second, different, shared ledger. Ledger exchange parties (LEP) may be parties to each of a plurality of ledgers in order to facilitate fund transfers between ledgers. A transfer from a first user (User A) party to a first shared ledger (Shared Ledger 1) to a second user (User B) party to a second, different, shared ledger (Shared Ledger 2) may then be implemented as a first transfer from User A to LEP on Shared Ledger 1 followed by a second transfer from LEP to User B on Shared Ledger 2. The LEP therefore acts as an intermediate party in the transfer.

A LEP may be a party associated with a central bank with the power to create new currency on a shared ledger in that currency, for example. Alternatively, an LEP may be a private party who takes a commission on the transfer of funds from one ledger to another. There may be multiple LEPs who advertise the commission they charge, thereby allowing a user to select a particular LEP charging the lowest commission. The commission may be communicated in the form of a scaling factor, for example, the scaling factor being a factor by which a transfer of funds from User A to an LEP on the first shared ledger is multiplied during a subsequent transfer of funds from the LEP to User B on the second shared ledger. For example, a scaling factor of 0.98 would indicate a 2% commission (meaning that £1 transferred from User A to the LEP on Shared Ledger 1 results in £0.98 being transferred from LEP to User B on Shared Ledger 2, with the LEP keeping the £0.02 difference as commission).

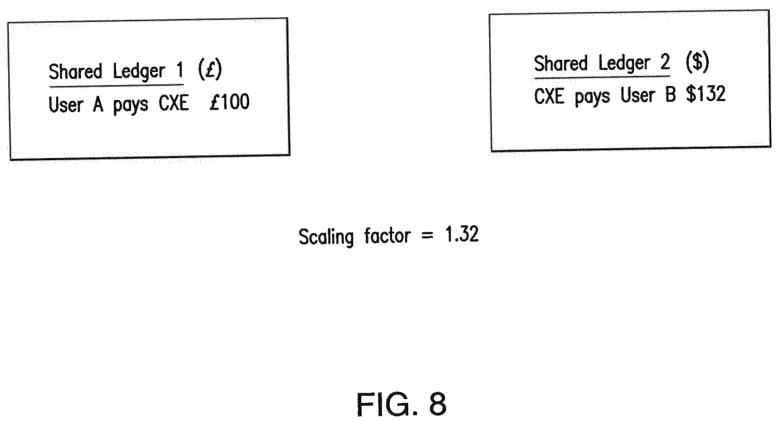

The concept of a LEPs and scaling factors may also be applied when Shared Ledger 1 and Shared Ledger 2 are in different currencies, thereby allowing inter-currency transfers on the shared ledger network 301. In this case, an LEP may be referred to as a currency exchange entity (CXE). This is exemplified in Figure 8, which shows a transfer of funds from User A on Shared Ledger 1 in Sterling (£) to User B on Shared Ledger 2 in US dollars ($) via a CXE. In this case, the scaling factor advertised by the CXE takes into account both the commission to be paid to the CXE and the exchange rate. In the example of Figure 8, the scaling factor is 1.32, giving an effective exchange rate of $1.32 to £1 for User A. If the floating exchange rate is, for example, $1.38 to £1, then this gives $0.06 (or, at the floating exchange rate, approximately £0.04) to the CXE.

Whether an LEP enables a transfer of funds between ledgers of the same currency or (in the form of a CXE) enables a transfer of funds between ledgers of different currencies, it will be appreciated that any transfer involving a shared ledger transfer may require the use of an LEP in order for the transfer to be completed.

For example, in Figure 6, if User A and User B are parties to different shared ledgers, then it will be necessary to employ the services of an LEP in order for the transfer to be completed. In the case that commission is paid to an LEP, User A (who initiates the transaction) may be provided with a choice of LEPs (together with each LEP's respective scaling factor) for completing the transaction, thereby allowing the user to know in advance the scaling factors and to hence determine the most suitable route between ledgers (enabled by the LEPs) to complete the transaction. The information on the LEPs able to complete the transaction may be transmitted to the device 100 by a node of the shared ledger network 301 as a message prior to respective transmission of the message M₁ by the device 100 (such a message may be transmitted to the device 100 in response to a request message transmitted by the device 100, for example). In the case that User A and User B are parties to different shared ledgers, the message M, may then comprise information indicative of the LEP to be used for the funds transfer from User A to User B.

The functionality of transmitting and/or receiving messages associated with LEPs and their respective scaling factors is implemented as part of the app, for example.

In the above examples, the shared ledger network has made a digital payment to a Bank (e.g. Bank B) in order for the bank to then credit one of its accounts (e.g. that of User B) as the destination of a payment. The shared ledger network is able to perform this task by executing a transaction to the shared ledger address of (in this example) Bank B. This address is known to the shared ledger network since, when Bank B joins the shared ledger network and is granted its address on the relevant shared ledger, the shared ledger network records where Bank B's address is (e.g. in the storage medium 110 of the device 106B controlled by the shared ledger network 301). From that point forward, whenever the shared ledger network needs to send a payment to an account at Bank B (e.g. in response to a message M₁ in Figure 5), it credits Bank B's address on the shared ledger and then sends a notification message to Bank B (e.g. message M₂ in Figure 5) to inform Bank B of the payment. In the same way, whenever a bank (e.g. Bank A) needs to send a payment from one of its accounts using the shared ledger network (e.g. in response to message M₁ in Figure 4), it debits that account internally and informs the shared ledger network (e.g. using message M₂) to make the payment using its own address (e.g. the address of Bank A on the shared ledger) as the source address. In this way, while bank fiat currency and digital fiat currency cannot be exchanged on the same ledger, by following the principle of the banks themselves (e.g. Banks A and B) each having an address on a shared ledger, bank transactions can be limited to the banking system 300 (including internal transfers within the bank) and shared ledger transactions can be limited to the shared ledger network 301. At the same time, the coordination between the two (e.g. as enabled by the sending of message M₂ between a bank and the shared ledger network) provides the overall movement of funds and a unified payments system in the fiat currency between digital and bank forms that is seamless to end users.

It will thus be appreciated that the above-mentioned embodiments may be used to provide a payment processing system that routes payments from end users to either an appropriate payer bank or to a node of the correct shared ledger network. Payments can be processed in bank fiat currency (the currency held in bank accounts), digital fiat currency (the currency held on shared ledgers), or between them. Digital fiat currency is a digital form of existing fiat currency and is recorded as amounts at positions (party addresses) on a shared ledger. It has the following life-cycle:
- Digital fiat currency is issued by central banks to retail banks (e.g. Bank A, Bank B), who hold it at bank addresses on the ledger. This currency is issued by the central bank in response to purchase of the digital fiat currency by a retail bank using regular funds (base money). Thus, for example, in order for Banks A and B to credit digital fiat currency on the shared ledger, they must have funds on the shared ledger credited to them by the central bank. The central bank has the power to credit digital fiat currency to Banks A and B on the shared ledger in return for base money received from Banks A and B. This credit in return for base money is implemented using traditional methods by which a retail bank and central bank may exchange value measured in base money. (Such methods are known and not described here in more detail.) The central bank may occupy a position on the shared ledger in order to transfer digital fiat money to Banks A and B on the shared ledger. A party has a "position" on a shared ledger when it is a party to the shared ledger such that it can send and receive funds on the shared ledger.
- Digital fiat currency may be paid to end users (e.g. User A, User B) by the retail bank when an end user converts bank fiat currency from one of their accounts with that bank to digital fiat currency. This conversion is implemented transparently to the end user during an inter-entity transfer like that shown in Figures 4 (debit 401 of bank fiat currency from User A's bank account 302 at Bank A is associated with a corresponding transfer 402 of digital fiat currency from Bank A to User B on the shared ledger 400), for example.
- Digital fiat currency may be exchanged freely between pairs of addresses on the same shared ledger of the shared ledger network (e.g. the two part shared ledger address, as exemplified in Figure 6).
- Digital fiat currency may be surrendered by end users (e.g. User A and User B) and converted to bank fiat currency. This conversion is implemented transparently to the end user during an inter-entity transfer like that shown in Figure 5 (transfer 500 of digital fiat currency from User A to Bank B on the shared ledger 400 is associated with a corresponding credit 503 of bank fiat currency to User B's bank account 303 at Bank B, thereby resulting in a reduction in the total amount of digital fiat currency held by the end users and an increase in the total amount of bank fiat currency held by the end users), for example.
- Retail banks may sell digital fiat currency back to the central bank in exchange for regular base money In this case, the retail banks (for example Bank A and Bank B) send a message to a node of the shared ledger network hosting the shared ledger tracking the digital fiat currency they wish to sell. This message includes the amount of digital fiat currency they wish to sell, and identifies the retail bank's address on a shared ledger hosted by the shared ledger network from which it should be taken. The shared ledger network responds to this message by transferring the specified amount of the digital fiat currency across the shared ledger holding the retail bank's address to the address of the central bank on the same shared ledger. The central bank's address on the shared ledger is known to the shared ledger network by prior configuration. The shared ledger network then sends a signal to the central bank indicating that this transfer has occurred. The central bank may then delete the digital fiat currency transferred in this way (being the only entity in the shared ledger network able to issue a command to perform this operation). The central bank then credits the bank the regular base money equivalent for the digital fiat currency. Again, this credit in return for digital fiat currency is implemented by traditional methods by which a retail bank and central bank may exchange value measured in base money (such methods are known and not described here in more detail.)

In traditional fractional reserve banking, a retail bank (for example Bank A) may issue a loan to an account. As part of this process, local regulatory requirements with which the bank must comply will require it to set aside a base money equivalent of some fraction of this loaned amount (known as the reserve amount) in order to ensure the bank's solvency in the case that a fraction of such loans are never repaid. Thus, the traditional banking system allows banks to operate by only funding with base money a fraction of the bank fiat currency they create and make available for payments.

It is noted that a problem with some existing digital fiat currencies is that they require the system to work 'pre-paid'. That is, all payments transfer digital currency purchased from the central bank with base money. This requirement effectively creates an equivalence between the digital fiat currency and base money. Thus, any widespread adoption of the digital fiat currency for routine payments between end users would result in a correspondingly reduced usage of bank fiat currency for the same payments. The reduced utility of bank fiat currency would inhibit the process of fractional reserve banking upon which economic growth in many economies depends. This is because a retail bank's limited reserve of base money would only be able to make available for payments a numerically equal amount of digital fiat currency rather than some multiple of this as fractional reserve banking would permit.

The present technique, however, allows the equivalent of fractional reserve banking, called Centralized Reserve Banking (CRB), thus preserving the money generating aspect of the traditional bank fiat currency economy in a new one based upon digital fiat currency.

CRB introduces an exchange rate (set by the central bank) between the retail banks use of base money to purchase the digital fiat currency and the amount of digital fiat currency acquired. This exchange rate is invisible to end users (that is, bank fiat currency and digital fiat currency are always of identical value, being presented to end users as simply different forms of the same fiat currency in the same way that traditional fiat cash is of equal value to bank fiat currency). This exchange rate then allows a retail bank (for example Bank A) to use an amount of base money to acquire some multiple of that amount in digital fiat currency from the central bank. Subject to the local regulatory requirement for the reserve amount, and the exchange rate set by the central bank, CRB allows an amount of a retail bank's base money reserve to be used to make available for payments the same amount of digital and bank fiat currency.

Furthermore, by introducing this purchase exchange rate for digital fiat currency, it is possible for the central bank to operate an equivalent CRB banking system to the fractional reserve banking system used traditionally with bank fiat currency. Furthermore, CRB allows this equivalent system to be more directly enforced by the central bank and other regulators than the reserve requirement of today's fractional reserve systems. For example, in order for the central bank to enforce a bank fiat currency reserve requirement of 20%, with CRB the central bank sets an exchange rate of base money to digital fiat currency purchased by retail banks from the central bank at 1:5 (base money to digital fiat currency).Thus, not only does the central bank have more visibility over the operation of the retail banks with regards to digital fiat currency transactions (due to all transfers being openly recorded by the shared ledger network), it also has greater visibility and control over the money supply. In particular, the central bank can guarantee that the equivalent of the reserve requirement is being met for the digital fiat currency as only the central bank can issue the digital fiat currency at an exchange rate with base money set by the central bank.

Furthermore the central bank may change the exchange rate between base money and digital fiat currency in order to increase or decrease, the money supply. For example, the central bank may alter the exchange rate from 1:4 to 1:5 (base money to digital fiat currency), thus reducing the amount of base money a retail bank needs to make the same amount of digital fiat currency available for payments on the shared ledger. This would have the effect of increasing the money supply across the economy for that currency. Altering the digital fiat currency exchange rate in this way provides central banks with an additional control over the money supply when using a digital fiat currency, one directed at controlling the retail banks' propensity to lend (changes in the exchange rate resulting in a different cost in base money for the retail bank to lend the same amount to an end user) in addition to (as currently used) the base interest rate, which indirectly controls the end users' propensity to borrow.

As mentioned above, a shared ledger network may support multiple shared ledgers, some of which may be in different currencies.

LEPs (in particular, CXEs) may hold positions on multiple ledgers and advertise routes between them to the shared ledger network. Payments processed by the shared ledger network between ledgers result in the shared ledger network computing a path from source to destination ledger and breaking the payment down into sub-payments each of which is limited to a single ledger, and where subsequent sub-payments are each linked by a routes offered by a LEP. When considering this path from payer to payee, it is useful to refer to elements on the path closer to the end user payer being 'upstream' and elements on the path closer to the end user payee as being 'downstream'. Thus, the overall payment is a movement of funds downstream from payer to payee.

Considering, for example, a route offered by a LEP from a shared ledger X to a shared ledger Y, the LEP will facilitate payments including a sub-payment on shared ledger X and a sub-payment on shared ledger Y. By convention we might consider the route from X to Y to be directional in that it facilitates payments that have paths from payer to payee such that shared ledger X is upstream of shared ledger Y.

Each route offered by a LEP will have an address on each of ledger X and ledger Y. These addresses may be called 'port addresses'. A 'port address' is an organisation's (rather than an end user's) liquidity position on a shared ledger that exists to facilitate the payments of end users. A port address on a first ledger has a corresponding port address on a second ledger in order to facilitate payments between users on the first ledger and second ledger. A debit (or credit) of the first ledger port address is accompanied by a corresponding credit (or debit) of the second ledger port address (taking into account a scaling factor, if appropriate). A set of corresponding port addresses (associated with entities such as LEPs) therefore provide routes for the transfer of funds between the respective ledgers of those port addresses. When executing a payment crossing between ledgers, the payment's path results in the upstream port address of the route offered by the LEP on the upstream ledger being credited and the same route's downstream port on the downstream ledger being debited. Routes are offered at a 'scaling factor' of the amount being transferred at that point. This scaling factor includes the commission to the LEP and also the exchange rate should the source and destination ledgers not be in the same currency.

When crossing between ledgers of the same currency, central bank positions on source and destination ledgers may take the place of the LEP port addresses. Central banks may adjust their liquidity positions on the shared ledgers periodically. They may do this by issuing updates to this effect to the shared ledger network.

A retail bank (e.g. Bank A or Bank B) which is a party of a shared ledger of the shared ledger network may advertise its address on that shared ledger and currency to the shared ledger network so that when the network processes payments to accounts at that bank, the network can automatically direct the payment to the bank's address on that ledger before notifying the bank of the payment). The bank's address on a shared ledger is called it's bank address. A bank may have multiple bank addresses, one for each shared ledger on which it is able to make and receive payments . In an embodiment, a bank has only one bank address per shared ledger. This allows the shared ledger network to always know the bank address from which funds should be taken or paid to for a payment or sub-payment from or to a particular bank.

Likewise LEPs may advertise routes to the shared ledger network by declaring the route's upstream and downstream port address (and so indicating the respective upstream and downstream ledger the route links) and the conversion rate the LEP is offering for that route. By holding a record of all advertised routes, the shared ledger network is able to compute the cheapest overall path (called the preferred path) between any two shared ledgers, between any shared ledger and bank, and between any two banks.

This allows the shared ledger network, on receiving a payment request that spans shared ledgers and/or banks to apply the appropriate preferred path to break the payment into sub-payments. When the shared ledger network receives a payment that is broken up in this way, it keeps track for each such payment what the sub-payment was and executes all sub-payments.

If any of the sub-payments fail, the shared ledger network reverses those that have been successful and returns an error response to the originator of the request (e.g. as a response to the message M₁ shown in Figures 4 to 7). If all sub-payments are successful, then the shared ledger network returns a success response to the original requester (e.g. as a response to the message M₁ shown in Figures 4 to 7).

Banks may also receive information on published routes from LEPs over the shared ledger network in the form of preferred (and alternate) paths, starting with the bank and terminating in each other bank and shared ledger known to the shared ledger network. For each preferred path received in this way, the overall conversion factor for the path is computed by the bank as the product of all conversion rates comprised within the path. For example, if the preferred path from Bank A to a party on a shared ledger Z comprises sub-payments on a shared ledger X and a shared ledger Y with conversion factors Cₓ and C_{y} (Cₓ being the conversion factor for a first sub-payment from ledger X to ledger Y using a first LEP with positions on both ledger X and ledger Y and C_{Y} being the conversion factor for a second sub-payment from ledger Y to ledger Z using a second LEP with positions on both ledger Y and ledger Z) the overall conversion factor is Cₓ * C_{y}. In this way, a retail bank may initiate a transfer using the shared ledger network and request for that payment the use of a shared ledger network preferred path to execute it. Knowing the preferred path that will be used for the payment allows the bank to know the overall conversion factor that will be used for the payment. Thus, the bank may ensure the payment amount to the destination address is properly funded with the initial deduction from the source address. That is, if the end user's payment to the destination address is X, and the overall conversion of the selected path is C, then the actual payment must include an initial deduction from the source address of X divided by C. In an embodiment, the end user device (such as device 100) allows the user to enter the amount X for the payment and then prompts the user to accept the amount X/C before initiating the payment for X/C. Such an arrangement may be used instead of or in combination with providing a user of the device 100 with the opportunity to select LEPs for one or more stages of a funds transfer involving an inter-ledger funds transfer.

More generally, the device 100 (e.g. as enabled the app run on the device) is able to receive information indicative of the advertised routes between different shared ledgers in order to determine the preferred path for any given payment. If a payment begins or ends at a particular bank and that bank is a party to a plurality of shared ledgers, the determination of the preferred path takes into account the shared ledgers to which the bank is a party when determining the preferred path.

For example, if a bank is a party to a shared ledger X and a shared ledger Y and a payment is instructed from the bank to a party on a shared ledger Z, the determination of the preferred path determines routes between shared ledger X and shared ledger Z and between shared ledger Y and shared ledger Z in order to determine the preferred path. As another example, if a bank is a party to a shared ledger X and a shared ledger Y and a payment is instructed from a party to the shared ledger Z to the bank, the determination of the preferred path determines routes between shared ledger Z and shared ledger X and between shared ledger Z and shared ledger Y in order to determine the preferred path. For either case, it is known that the bank is a party to shared ledger X and a party to shared ledger Y because the bank advertises this information in advance and the database stored in the storage medium 110 of the devices 106A and/or 106B enabling the transfer between the bank and the party to the shared ledger Z relates the unique identifier of each bank with the two-part shared ledger address for that bank on each of the shared ledgers X and Y. The storage medium 110 may also store the conversion factor offered by each LEP allowing payments between the shared ledgers X and Z and between the shared ledgers Y and Z, thereby allowing the relevant device 106A or 106B (in particular, the processor 107) to determine the preferred payment path between the bank and the party to the shared ledger Z.

An example of information relating the unique identifier of each of a plurality of banks with respective sets of one or more shared ledger addresses is shown in Table 1. Such information is stored in a database in the storage medium 110 of device 106A and/or 106B for routing inter-entity payments, for example.

**Table 1**

| **Bank** | **Shared Ledger Address** |
|---|---|
| Bank A unique identifier | Unique ledger X identifier (X_{ID}) . Bank A unique party identifier on X (AX_{ID}) |
| | Unique ledger Y identifier (Y_{ID}) . Bank A unique party identifier on Y (AY_{ID}) |
| Bank B unique identifier | Unique ledger Z identifier (Z_{ID}) . Bank B unique party identifier on Z (BZ_{ID}) |

An example of information indicating the conversion factors between different shared ledgers is shown in Table 2. Such information is stored in a database in the storage medium 110 of device 106A and/or 106B for routing inter-entity payments, for example. This information is updatable (e.g. via communication interface 109) in accordance with updates to the conversion factor advertised by each LEP.

**Table 2**

| **Source Ledger** | **Destination Ledger** | **Conversion Factor** | **LEP** | **Route ID** |
|---|---|---|---|---|
| X | Z | 1.32 | LEP 1 | 0001 |
| X | Z | 1.35 | LEP 2 | 0002 |
| Y | Z | 1.31 | LEP 1 | 0003 |
| Y | Z | 1.30 | LEP 2 | 0004 |

It can be seen that the preferred payment path depends on the source and destination addresses and the conversion factors between the shared ledgers. For example, if a first account holder (User A) at Bank A wishes to transfer funds to a second account holder (User B) at Bank B via the shared ledger network (e.g. as exemplified in Figure 7), an inter ledger transfer is required because Bank A has shared ledger addresses only on shared ledgers X and Y whereas Bank B has a shared ledger address only on shared ledger Z. Each route in Table 2 (represented by a row in Table 2) is defined by a source ledger, a destination ledger, a conversion factor, an identifier of the LEP allowing the transfer of funds between the source and destination ledgers with the given conversion factor and a route ID. The route IDs each uniquely identify each respective route between the source ledger and destination ledger.

The device 106A knows this because, upon receiving a message M₁ comprising User A's bank account at Bank A as the source address and User B's bank account at Bank B as the destination address, the processor 107 (upon deciding, e.g. based on network traffic considerations, that this bank to bank transfer will occur via the shared ledger network 301 rather than via the interbank network 306) looks up the unique identifier of Banks A and B in the database shown in Table 1 and retrieves the shared ledger addresses associated with these unique identifiers. In this case, the shared ledger addresses associated with Bank A are X_{ID}.AX_{ID} and Y_{ID}.AY_{ID} (for shared ledgers X and Y, respectively) and the shared ledger address associated with Bank B is Z_{iD}.BZ_{ID} (for shared ledger Z). The processor 107 therefore knows, based on the retrieved shared ledger source addresses X_{ID}.AX_{ID} and Y_{ID}.AY_{ID} and the retrieved shared ledger destination address Z_{ID}.BZ_{ID}, that an inter-ledger transfer is required.

The processor 107 then looks up the conversion factors provided by different LEPs (in this case, LEP 1 and LEP 2) in the database shown in Table 2. In this case, the best conversion factor (1.35) is that provided between X and Z by LEP 2 (in an example, User A's bank account at Bank A contains funds in sterling (£) and User B's bank account at Bank B contains funds in US dollars ($), hence the need for a conversion factor). This corresponds to the route with route ID "0002". The device 106A therefore transmits message M₂ to the shared ledger network requesting a transfer of funds between shared ledger address X_{ID}.AX_{ID} on shared ledger X and User B's bank account at Bank B via the route with route ID "0002". In response to receiving the message M₂, the processor 107 of the device 106B selects the shared ledger address associated with Bank B to which the funds are to be transferred based on the route ID and the unique identifier of Bank B. The storage medium 110 of device 106B also includes the information of Tables 1 and 2 to allow the processor 107 to do this. Thus, for example, when the route ID included in message M₂ is "0002", the processor 107 of device 106B will look up the route ID "0002" in Table 2 and determine that the destination shared ledger is shared ledger Z. The processor 107 will then look up the address of Bank B on shared ledger Z in Table 1. The processor 107 then controls the shared ledger network to implement the transfer of funds from Bank A's address on shared ledger X (X_{ID}.AX_{ID}) to Bank B's address on shared ledger Z (Z_{ID}.BZ_{ID}) via LEP 2 (the use of LEP 2 also being indicated by the route ID "0002").

Once the shared ledger transfer is complete, the device 106B issues the final message M₃ to Bank B instructing the credit of funds to User B's bank account, as previously described.

It will be appreciated that, for ease of explanation, this is a simplified example. This example may be extended, according to embodiments, to take into account a larger number of shared ledgers and a larger number of relationships between the shared ledgers. For example, it is possible that there is no direct LEP link between a first shared ledger X and a second shared ledger Z and that an inter ledger transfer between such shared ledgers requires a third shared ledger Y with separate respective LEP links with each of the shared ledgers X and Z. In this case, the combined conversion factors for the various routes between X and Y and between Y and Z are calculated by the relevant processor 107 (and each of these combined routes are allocated a unique route ID) in order to determine the preferred payment path.

In the above-mentioned example, the device 106A is configured to determine all routes between each source shared ledger address associated with Bank A and each destination shared ledger address associated with Bank B. In the above-mentioned example, there was only one destination address (Z_{ID}.BZ_{ID}) for Bank B. However, if Bank B is a party to a plurality of different ledgers, then there would be a plurality of destination addresses for Bank B and the processor 107of device 106A takes this into account when determining the preferred path based on the available LEP conversion factors. Again, each overall route between each source shared ledger address and each destination shared ledger address (whether being a route involving one inter-shared ledger transfer or being a combined route involving a plurality of inter-shared ledger transfers) is allocated a unique route ID.

It will be appreciated that, although the above-mentioned description relates to the example of Figure 7, the same applies for the examples of Figures 4 to 6 in the case that an inter-ledger transfer is required.

For example, in response to the device 106A receiving a message M₁ as described with reference to Figure 4, the processor 107 of device 106A first looks up (e.g. using a table like Table 1) the one or more shared ledger addresses associated with Bank A. In the case that the one or more shared ledger addresses associated with Bank A are on a different shared ledger to that of the destination shared ledger address (included in message M₁), the processor 107 looks up (e.g. using a table like Table 2) the conversion factor(s) between these addresses and the destination shared ledger address in order to determine the shared ledger source address and route ID associated with the preferred path. The determined shared ledger source address and route ID are then included in message M₂, thereby allowing the shared ledger network 301 to implement the transfer from Bank A to User B using the preferred path identified by the route ID.

As another example, in response to the device 106B receiving a message M₁, as described with reference to Figure 5, the processor 107 of device 106A looks up (e.g. using a table like Table 1) the one or more shared ledger addresses associated with Bank B. In the case that the one or more shared ledger addresses associated with Bank B are on a different shared ledger to that of the source shared ledger address (included in message M₁), the processor 107 looks up (e.g. using a table like Table 2) the conversion factor(s) between these addresses and the source shared ledger address (included in message M₁) in order to determine the shared ledger destination address and route ID associated with the preferred path. The device 106B then instructs the shared ledger network 301 to implement the transfer from User A to Bank B using the preferred path identified by the route ID.

As another example, in response to the device 106B receiving a message M₁, as described with reference to Figure 6, in the case that the source shared ledger address associated with user A is on a different shared ledger to that of the destination shared ledger address associated with user B (included in message M₁), the processor 107 looks up the conversion factor(s) between the source and destination shared ledger addresses in order to determine the route ID associated with the preferred path. The device 106B then controls the shared ledger network 301 to implement the transfer from User A to User B using the preferred path identified by the route ID.

In the above examples, it is known that two shared ledger addresses are addresses on different shared ledgers because the respective unique ledger identifier parts of the addresses (e.g. X_{ID} for shared ledger X, Y_{ID} for shared ledger Y and Z_{ID} for shared ledger Z) will be different.

Thus, for Figures 4 and 5, although the shared ledger transfer is shown to occur over a single shared ledger 400 (for ease of explanation), it will be appreciated that, in reality, the shared ledger transfer may involve transfers over a plurality of shared ledgers. It will also be appreciated that, even for shared ledger to shared ledger transactions like that exemplified in Figure 6, it may still be necessary to determine the preferred path (e.g. using information in a table like Table 2) if the source and destination shared ledger addresses are on different shared ledgers in the shared ledger network 301.

It will thus be appreciated that the devices 106A and 106B operate in different modes depending on the content of messages received by them.

For example, in response to device 106A receiving a first type of message M₁ comprising a bank account as the source address and a bank account as the destination address, device 106A implements the functionality exemplified with reference to Figure 3 or Figure 7 (in the latter case, with preferred path determination using a suitable route ID, if necessary). On the other hand, in response to device 106A receiving a second type of message M₁ comprising a bank account as the source address and a shared ledger address as the destination address, device 106A implements the functionality exemplified with reference to Figure 4 (with preferred path determination, if necessary). In the examples of Figure 4 and Figure 7, the specific source shared ledger address of Bank A is determined prior to the shared ledger network 301 being instructed to implement the transaction. This ensures that Bank A can digitally sign the shared ledger transaction using a private key associated with the specific source shared ledger address (thereby helping alleviate the risk of fraudulent transactions being implemented by the shared ledger network).

As another example, in response to device 106B receiving a first type of message M₁ comprising a shared ledger address as the source address and a shared ledger address as the destination address, device 106B implements the functionality exemplified with reference to Figure 6 (with preferred path determination, if necessary). On the other hand, in response to device 106B receiving a second type of message M₁ or M₂ comprising a shared ledger address as the source address and a bank account as the destination address, device 106B implements the functionality exemplified with reference to Figure 5 or Figure 7 (including preferred path determination, if necessary). In the example of Figure 5, in response to receiving the message M₁, the device 106B itself determines the route ID (if necessary) and, if the conversion rate is approved by the user (as will be explained), instructs the shared ledger network 301 to implement the transfer of funds from User A to Bank B accordingly. In the example of Figure 7, the message M₂ comprises the route ID (if necessary) and, in response to receiving the message M₂, the device 106B instructs the shared ledger network 301 to implement the transfer of funds from Bank A to Bank B accordingly.

In the above examples, the preferred path (indicated by its associated route ID) is determined prior to the shared ledger network 301 being instructed to implement the transaction. This enables the device 106A or device 106B which determines the preferred path to transmit a confirmation request message (not shown) to the device 100 to inform the user of the conversion rate of the determined preferred path and for the user, if they are happy with the conversion rate, to transmit a confirmation message (not shown) back to the device 106A or device 106B confirming that they wish the transaction to go ahead (in response to which the device 106A or device 106B instructs the shared ledger network to implement the transaction).

For example, in response to receiving the confirmation request message, the device 100 may display a further screen (not shown) on the user interface 104 of the device 100 informing the user of the conversion rate and providing a virtual button (not shown) which, in response to being touched by the user, results in the device transmitting the confirmation message. Instead of or in addition to the conversion rate, the screen may show the total amount which must be paid by the user in order to pay a predetermined amount to a payee. For example, with the above-mentioned conversion rate of 1.35 (for route ID "0002"), if a user is making a purchase worth, say, $250 (250 US dollars) using a bank account or shared ledger address with a balance in sterling (£), the screen would tell the user that the best conversion rate available is 1.35 and that this will result in an amount to be paid by the user of 250 / 1.35 = £185.19. The user is thus able to see the total amount of funds they will pay at the best conversion rate prior to the transfer of funds being implemented.

It will be appreciated that variations of this example may be implemented. For example, the user may be provided with a choice of several conversion rates (provided by different LEPs) and may select one of them (in this case, the confirmation request message would include the details relating to a plurality of conversion rates and the confirmation request would indicate the user's selected conversion rate). This would allow the user to select a conversion rate provided by a user's preferred LEP, for example. It will be appreciated that the bank and/or shared ledger network may handle the collection and selection of conversion rates based on those published and updated in a table like Table 2 in any suitable manner.

Although the above example determines the currency conversion rate based on a scaling factor alone (e.g. 1.35 in the above example), other types of exchange rate calculation are possible in embodiments. For example, instead of calculating the exchange rate purely on a scaling factor, each LEP may advertise "commission" and "exchange" exchange values represented, respectively, by a constant amount deducted and a scaling factor. For example, a route might have an exchange value of 1.2 and a fixed commission value of £1.50 on a route from GBP to USD. If the amount transferred on the upstream ledger for a payment is £x, then amount transferred on the downstream ledger would be $((x - 1.50) * 1.2) (or $0.00, whichever is the higher). In this case, the shared ledger network and the banks, when determining their preferred paths between ledgers, must also take into account the amount being transferred. For example, paths with high exchange rates might not be the best paths to use if the amount being paid is small and these routes also have high fixed commissions.

In an embodiment, in order to help banks (or, more generally, financial institutions, also known as financial service providers (FSPs)) and LEPs to manage their liquidity positions on the shared ledger network (i.e. at their FSP and port addresses, respectively), the shared ledger network may monitor the digital fiat currency held by FSPs and LEPs at these addresses and provide high and/or low liquidity watermark notifications for them to use to trigger the purchase / sale of digital fiat currency with a central bank or the transfer of funds between different shared ledgers (e.g. from a first shared ledger in which the FSP or LEP holds a high amount of digital fiat currency to a second shared ledger in which the FSP or LEP holds a lower amount of digital fiat currency).

It will thus be appreciated that, with the present technique, a single shared ledger network may operate multiple shared ledgers, each in common or different currencies. Multiple ledger networks may be linked into a wider (global) payment network by the central bank issuing digital fiat currency to FSPs and/or LEPs offering routes between the shared ledgers. This provides a means to implement current correspondent banking with the present technique.

The present technique may also help to facilitate open banking (which involves securely sharing financial information typically only accessible to FSPs to a wider array of entities in order to provide a larger range of services to users). Current approaches to `open banking' involve making a user's bank account details available to third parties to initiate payments via an Application Programming Interface (API) provided by their bank. This is a complex process and requires many systems to be opened up to an increasing number of other systems. Furthermore, the present technique helps to alleviate limitations associated with conventional bank accounts. Such limitations include that a bank account is bound to a specific bank and that this bank can exploit this relationship with the customer in order to prevent a full assessment by the customer of the full range of financial services available.

With the present technique, a more robust approach to open banking is provided. In particular, with the present technique, end users' bank accounts may be complimented by or even replaced by positions on one or more shared ledgers of a shared ledger network (thus removing the user's dependence on the particular bank hosting their bank account). In order to alleviate the need for a new agency to be established, however, banks may host the shared ledger network nodes. End users may have standing orders, direct debits (or other automatic regular payments) provided by smart contracts in the shared ledger network. Directories of financial products (from many different service providers, not just a user's bank) may be made available on the shared ledger network in order to allow customers to select them. These are some examples of how the present technique may increase competition between banks and allow them to focus on providing specific regulated financial products such as savings and loan accounts.

Systems that process payments using a combination of financial institutions, traditional bank payment processing systems (e.g. interbank network 306) and shared ledger networks (e.g. shared ledger network 301) must avoid processing duplicated payment requests. It will be appreciated that allowing messages to be freely routed from end user devices (such as 100) to either a bank or a shared ledger network creates a requirement for a clear set of business rules to avoid any payment request from being processed more than once. In an embodiment, the business rules to alleviate the risk of duplicate payment processing are as follows:
- Any payment that includes processing by a traditional payments network (e.g. interbank network 306) that is rejected as a duplicate by that traditional payments network is rejected as a duplicate.
- Any payment that has as its source address an account at a bank will be checked as a duplicate by that bank and rejected as a duplicate if it is. This rule is also applied to any request message provided to a bank associated with a payment (e.g. message M₂ in Figure 5 or message M₃ in Figure 7) that is found by that bank to be a duplicate message.
- Any payment that has as its source address an address on a shared ledger will be checked as a duplicate by that shared ledger network and rejected as a duplicate if it is. This rule is also applied to any request message provided to a shared ledger network associated with a payment (e.g. message M₂ in Figure 4 or message M₂ in Figure 7) that is found by that shared ledger network to be a duplicate message.

In one example, a message may be determined as a duplicate by way of messages being timestamped. Non-duplicated messages indicating a repeated transaction will have different timestamps (e.g. if a user is a tenant paying the same amount of rent from the same tenant bank account or shared ledger position to a landlord at the same landlord bank account or shared ledger position each month, resulting in the message M₁ comprising the same payment details from month to month but having a different timestamp) and therefore will not be rejected as a duplicate. On the other hand, duplicated messages (e.g. two or more messages M₁ comprising the same tenant and landlord payment details with the same timestamp) will be detected as duplicates and will be rejected. In general, if a message has the same timestamp as one or more previous messages, then the later message is compared with each of the one or more previous messages. If there is a match with one of the previous messages, then the later message is repeated as a duplicate.

In another example, a field in the message (such as a message identifier (message ID) which is unique for the message or a digital signature of the message when the digital signature is generated using a message comprising content which differs for each message) can be used to identify duplicate messages. If a message has the same value for such a field (e.g. the same message ID or the same digital signature) as a previously seen message, then the later message is rejected as a duplicate.

In another example, a predetermined property of the message (such as its length or a hash computed from the message text) is used. A message having the same such value for this property as a previous message can either be rejected as a duplicate (e.g. in the case of the property being a hash, for example) or compared (in the case of the property being a length or hash, for example) with a group of one or more other previous messages having the same value for this property in order to see if this later message is identical to any of the one or more previous messages. If the message is already in the group, then it must be a duplicate. Otherwise it is added to the group (for comparison with future messages). This example is similar to the example of when a timestamp of a message is used to detect whether or not a message is a duplicate, except that this a property of the whole message rather than just a single field (i.e. timestamp) of the message.

It will be appreciated that, although for simplicity, Figure 4 shows the device 106A as being controlled by Bank A and Figure 5 shows the device 106B as being controlled by the shared ledger network 301, it will be appreciated that each of the banks (or, more generally, each of the FSPs) which implement the present technique and the shared ledger network 301 will control a respective instance of the device 106. During a transfer of funds involving both the banking system 300 and the shared ledger network 301 (as exemplified by Figures 4, 5 and 7), the device 100 and device(s) 106 form a system in order to allow the transfer to be carried out (e.g. in Figure 4, this system comprises device 100 and device 106A, in Figure 5, this system comprises device 100 and device 106B and in Figure 7, this system comprises device 100, device 106A and device 106B). The device 100 is exemplified as a smartphone, although it will be appreciated that the device 100 may take any other suitable form. The device(s) 106 may take any suitable form, for example, a suitable programmed node of the shared ledger network 301 (e.g. as for device 106B) or a suitable programmed computer controlled by each of the FSPs which implement the present technique (e.g. as for device 106A). It will also be appreciated that one or more of the device(s) 106 may be a standalone device operating by neither an FSP nor the shared ledger network 301 but which send and receive signals in order to allow the FSP and/or shared ledger network 301 to carry out the processing necessary for completing the funds transfer.

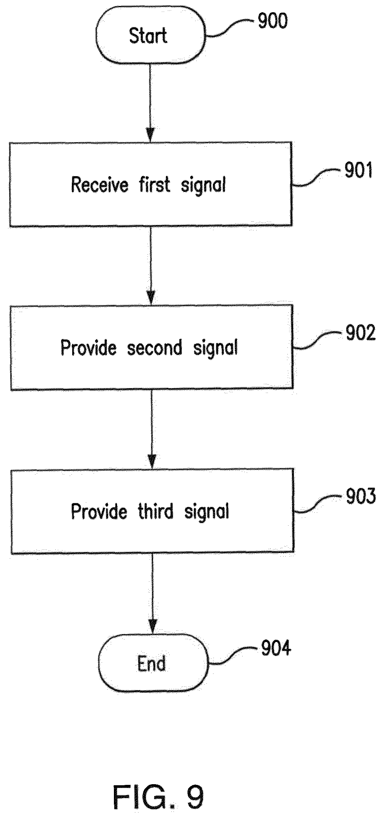

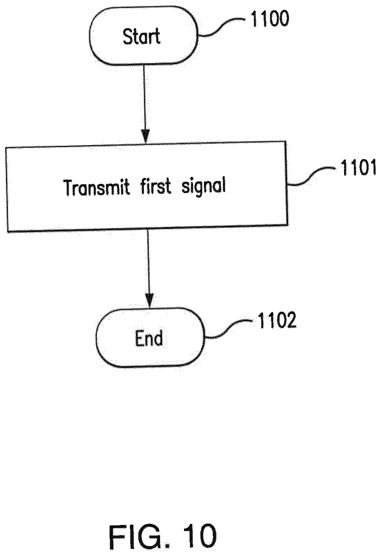

It will be appreciated that, although, in the above-mentioned examples, the devices 100 and 106 implement related changes of information over the separate information processing entities of a banking system 300 and a shared ledger network 301 (the changes of information relating to a reduction in funds held by a first party and a corresponding increase in funds held by a second party, thereby resulting in a transfer of funds from the first party to the second party), it will be appreciated that this is only an example and that the present technique is applicable for easily, efficiently and robustly implementing related changes of information over separate information processing entities of any kind. Methods carried out more generally by each of the first and second information processes devices 106 and 100 are therefore described, respectively, by Figures 9 and 10.

Figure 9 shows a process implemented by the information processing device 106 according to an embodiment.

The method starts at step 900.

At step 901, the communication interface 109 receives a first signal. The first signal indicates a first change of information stored at a first address defined with respect to a first information processing entity and indicates a second change of information stored at a second address defined with respect to a second information processing entity. The second change of information depends on the first change of information and the second information processing entity is separate to the first information processing entity.

A first example of the first signal is the message M₁ in Figure 4 (for the device 106A). Here, the first information processing entity is the banking system 300, the first address identifies User A's bank account at Bank A and the first change of information is a reduction in funds in User A's bank account. The second information processing entity is the shared ledger network 301, the second address identifies User B as a party to the shared ledger 400 and the second change of information is an increase in funds to User B on the shared leger 400 (in particular, a transfer of funds from Bank A to User B on the shared ledger 400) corresponding to the decrease in funds in User A's bank account.

A second example of the first signal is the message M₁ in Figure 5 (for the device 106B). Here, the first information processing entity is the shared ledger network 301, the first address identifies User A as a party to the shared ledger 400 and the first change of information is a reduction in funds of User A on the shared ledger (in particular, a transfer of funds from User A to Bank B on the shared ledger). The second information processing entity is the banking system 300, the second address identifies User B's bank account at Bank B and the second change of information is an increase in funds in User B's bank account corresponding to the decrease in funds of User A on the shared ledger.

A third example of the first signal is the message M₂ in Figure 7 (for the device 106B). Here, the first information processing entity is the shared ledger network 301, the first address identifies Bank A as a party to the shared ledger 400 and the first change of information is a reduction in funds of Bank A on the shared ledger (in particular, a transfer of funds from Bank A to Bank B on the shared ledger). The second information processing entity is the banking system 300, the second address identifies User B's bank account at Bank B and the second change of information is an increase in funds in User B's bank account corresponding to the decrease in funds of Bank A on the shared ledger.

At step 902, the processor 107 provides a second a signal to the first information processing entity indicating the first change of information, the first information processing entity being configured to implement the first change of information stored at the first information processing entity in response to the second signal.

In the first example (Figure 4), the second signal is a signal to the banking system 300 requesting Bank A to reduce the funds in User A's bank account. The device 106A may be implemented as part of a proprietary information processing device (not shown) controlled by Bank A for changing bank account balances at Bank A (this is the case in Figure 4). In this case, the second signal comprises an internal instruction provided to Bank A's proprietary information processing device. Alternatively, the device 106A may be implemented as a separate device to Bank A's proprietary information processing device. In this case, the second signal is transmitted by the communication interface 109 to Bank A (e.g. over a network) for processing by Bank A's proprietary information processing device. In either case, the first signal (in this case, message M₁) is directed to Bank A but processed by device 106A prior to being processed by Bank A's proprietary information processing device.

In the second example (Figure 5), the second signal is a signal to the shared ledger network requesting the reduction in the funds of User A on the shared ledger 400 (in particular, a transfer of funds from User A to Bank B on the shared ledger). The device 106B may be implemented as part of a node (not shown) of the shared ledger network 301 (this is the case in Figure 5). In this case, the second signal comprises an internal instruction provided to the node.

Alternatively, the device 106B may be implemented as a separate device to the nodes of the shared ledger network 301. In this case, the second signal is transmitted by the communication interface 109 (e.g. over a network) to a shared ledger network node for processing by the shared ledger network 301. In either case, the first signal (in this case, message M₁) is directed to the shared ledger network 301 but processed by device 106B prior to being processed by the shared ledger network.

In the third example (Figure 7), the second signal is a signal to the shared ledger network requesting the reduction in the funds of Bank A on the shared ledger 400 (in particular, a transfer of funds from Bank A to Bank B on the shared ledger). The device 106B may be implemented as part of a node (not shown) of the shared ledger network 301 (this is the case in Figure 7). In this case, the second signal comprises an internal instruction provided to the node. Alternatively, the device 106B may be implemented as a separate device to the nodes of the shared ledger network 301. In this case, the second signal is transmitted by the communication interface 109 (e.g. over a network) to a shared ledger network node for processing by the shared ledger network 301. In either case, the first signal (in this case, message M₂) is directed to the shared ledger network 301 but processed by device 106B prior to being processed by the shared ledger network.

At step 903, the processor 107 provides a third signal to the second information processing entity indicating the second change of information, the second information processing entity being configured to implement the second change of information stored at the second information processing entity in response to the third signal.

In the first example (Figure 4), the third signal is the message M₂. M₂ is transmitted by the communication interface 109 (e.g. over a network) to a node of the shared ledger network and requests the increase in the funds of User B on the shared ledger 400 (in particular, a transfer of funds from Bank A to User B on the shared ledger).

In the second example (Figure 5), the third signal is the message M₂. M₂ is transmitted by the communication interface 109 to Bank B (e.g. over a network) for processing by a proprietary information processing device controlled by Bank B for changing bank account balances at Bank B (this is the case in Figure 5). M₂ requests the increase in funds in User B's bank account at Bank B.

In the third example (Figure 7), the third signal is the message M₃. M₃ is transmitted by the communication interface 109 to Bank B (e.g. over a network) for processing by Bank B's proprietary information processing device. M₃ requests the increase in funds in User B's bank account at Bank B.

In the third example (Figure 7), the first signal (message M₂) is transmitted to device 106B from another instance of the device 106, namely device 106A. The communication interface 109 of device 106A does this in response to receiving a message M₁ indicating a transfer of funds from User A's bank account at Bank A to User B's bank account at Bank B (e.g. instead of instructing the transfer of funds using the banking system 300). The message M₁ in this case is a fourth signal. In response to the communication interface 109 receiving the message M₁, the processor 107 provides a fifth signal to the banking system 300 requesting Bank A to reduce the funds in User A's bank account. The device 106A may be implemented as part of Bank A's proprietary information processing device (this is the case in Figure 7). In this case, the fifth signal comprises an internal instruction provided to Bank A's proprietary information processing device. Alternatively, the device 106A may be implemented as a separate device to Bank A's proprietary information processing device. In this case, the fifth signal is transmitted by the communication interface 109 to Bank A (e.g. over a network) for processing by Bank A's proprietary information processing device. In either case, the fourth signal (in this case, message M₁) is directed to Bank A but processed by device 106A prior to being processed by Bank A's proprietary information processing device. Following the reduction in funds of User A's bank account, the communication interface 109 transmits the first signal (message M₂) to the device 106B.

The method ends at step 904.

Figure 10 shows a process implemented by the information processing device 100 according to an embodiment. The method starts at step 1100. At step 1101, the communication interface 103 transmits the first signal indicating the first change of information stored at the first address defined with respect to the first information processing entity and indicating the second change of information stored at the second address defined with respect to the second information processing entity, the second change of information depending on the first change of information and the second information processing entity being separate to the first information processing entity. In the example of Figures 4 and 5, the first signal is message M₁, as previously described. The process ends at step 1102.

Thus, with the present disclosure, a data processing operation involving a plurality of sub-data processing operations in the form of changes to a plurality of instances of information is carried out in response to a single signal (e.g. message M₁ in any one of Figures 3 to 7) transmitted by a user device 100. This is the case even for interdependent changes to a plurality of instances of information managed by separate information processing entities (e.g. as in Figures 4, 5 and 7). The user experience in interacting with the device 100 in order to perform the data processing operation is thus made easier. Furthermore, because the device 100 need only transmit a single signal, even for interdependent changes to a plurality of instances of information managed by separate information processing entities, the processing which must be carried out by the device 100 is reduced (compared to known arrangements in which each separate sub-data processing operation requires a respective one of a plurality of signals, each transmitted by a user device). When the device 100 is a battery operated device such as a smartphone, tablet computer, laptop computer or the like, the reduction in processing requirements reduces power consumption, thereby improving battery life.

The device 106 (e.g. through the messages M₁, M₂ and (where present) M₃ and their respective successful / non-successful responses, as previously explained) also manages any interdependency between changes to a plurality of instances of information managed by separate information processing entities, thereby alleviating the risk of a change in one instance of information managed by a first information processing entity (e.g. debiting of funds from a bank account of a bank in a banking system) being implemented whilst a related change in another instance of information managed by a second information processing entity (e.g. a transfer of funds from the bank at which the bank account was debited to another user over a shared ledger network) is not implemented (due to an error or the like). This ensures that the overall data processing operation takes into account the success or failure of each sub-data processing operation and thus either succeeds completely or fails completely. This helps ensure the reliability of the system. At the same time, since this aspect of the data processing operation is handled by the device 106 (e.g. which is implemented as a large computer at a bank or shared ledger network) rather than the device 100 (e.g. which only has to send a single message M₁ and receive a single response to the message M₁), the processing required by the device 100 is reduced. The end user is thus provided with an easy to use, reliable service with low processing and power consumption requirements on their user device 100.

In the above embodiments, we refer to digital fiat currency as being a type of digital currency that is controlled (i.e. issued by) a central bank. However, it will be appreciated that the present scheme is also applicable to non-fiat digital currencies. In this case, the digital currency would be issued by some organisation acting as an exchange (i.e. issuing the currency in return for some other fiat bank or fiat / non-fiat digital currency), thereby allowing the purchase of the digital currency in any form as determined by the organisation issuing it.

In an embodiment, the message M₁ (in each of Figures 3 to 7) comprises a source address (e.g. User A's bank account at Bank A or User A's shared ledger address), a destination address (e.g. User B's bank account at Bank B or User B's shared ledger address), the currency (e.g. sterling (£) or US dollars ($)), payment amount (in the given currency, e.g. £100 or $200), a timestamp and a digital signature of the sender (e.g. a digital signature created by the processor 101 of device 100 using a private key stored in the storage medium 105). In order to increase the security of the system, the source and destination addresses are tokenised. In other words, each of the source and destination addresses included in the message M₁ have been respectively converted to information in a different form (i.e. converted to respective tokens). The original source and destination addresses can then only be obtained from their respective tokens (the message M₁ containing the tokens only, not the original source and destination addresses) by the data processing entity associated with that source or destination address. In an example, the data processing entity is a payment processing entity such as the banking system 300 or shared ledger network 301. For example, if the original source or destination address is a bank account, then the original source or destination address can only be obtained from the source address token by the bank at which that bank account is held. Similarly, if the original source or destination address is a shared ledger address, then the original source or destination address can only be obtained from the source address token by the shared ledger network 301.

The use of tokenised addresses in this way alleviates the need for a source or destination address in its original form to be shared with third parties, thereby increasing the security of the system (since no real source or destination addresses are known, it is more difficult for a third party to attempt a fraudulent transaction using someone else's source or destination address).

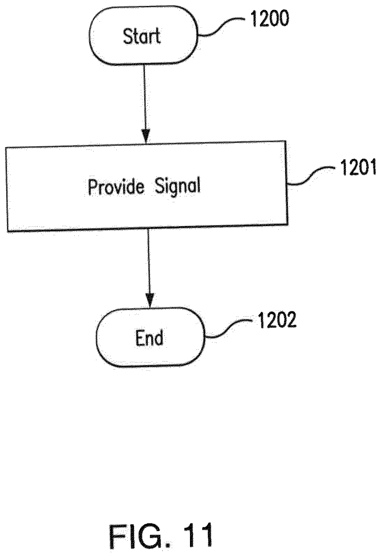

The use of source and destination address tokens in accordance with an embodiment is explained with reference to Figures 11 to 13.

Figure 11 shows a process implemented by the information processing device 100, according to an embodiment.

The process starts at step 1200.

At step 1201, the communication interface 103 provides a signal to a second information processing device. In one example, the signal is the message M₁ and the second information processing device is device 106A (in the case that M₁ is sent to the banking system 300, in particular, to Bank A). In another example, the signal is the message M₁ and the second information processing device is device 106B (in the case that M₁ is sent to the shared ledger network 301). In another example, the signal comprises a payment invitation message and the second information processing device 301 is another instance of device 100.

The signal comprises a message (in particular, the message M₁ or the payment invitation message) which is digitally signed with a digital signature associated with the device 100. This is generated by the processor 101 using a private key known only to the device 100 (e.g. securely stored in the storage medium 105). The digital signature is verifiable by the second information processing device using a public key corresponding to the private key (the public key being available to the second information processing device in advance, e.g. in a publicly accessible database relating a unique identifier of each of a plurality of devices 100 with a respective public key).

The signal comprises at least one of first information and second information.

The first information is information indicating a first change of information stored at a first address defined with respect to a first data processing entity (e.g. a decrease in funds of a certain amount in a certain currency as recorded at a bank account of the banking system 301 or recorded at a shared ledger address of the shared ledger network 301) and a tokenisation of the first address. The first address is derivable from the tokenised first address only by the first data processing entity for implementing the first change of information stored at the first address (e.g. the banking system 300 in the case that the first address is a bank account or the shared ledger network in the case that the first address is a shared ledger address). In an embodiment, the first address is tokenised by encrypting it using a public encryption key associated with the first data processing entity and a suitable asymmetric encryption technique (various asymmetric encryption techniques are known in the art and will therefore not be described in detail here). The encrypted first address is therefore the token. The token can then only be decrypted (in order to obtain the first address) by the first data processing entity using a private key corresponding to the public key, the private key being known only to the first data processing entity (in particular, known only to the bank when the first address is a bank account or known only to the shared ledger network when the first address is a shared ledger address). The first data processing entity is therefore able to implement the first change of information stored at the first address (as indicated by the first information) whilst, at the same time, a third party who intercepts the signal transmitted from the device 100 cannot decrypt the tokenised first address (since they do not have the private key). The first address therefore remains known only to the sender (e.g. holder of device 100) and the first data processing entity which implements the first change of information. The risk of fraudulent activity being conducted using the first address is therefore reduced, thereby improving the security of the system. In this example, each public and private key pair used for encryption and decryption of the first address is associated with a respective bank (in the case that the first data processing entity is the banking system 300) or with a respective shared ledger (in the case that the first data processing entity is the shared ledger network).

The second information is information indicating a second change of information stored at a second address defined with respect to a second data processing entity (e.g. an increase in funds of a certain amount in a certain currency as recorded at a bank account of the banking system 301 or recorded at a shared ledger address of the shared ledger network 301) and a tokenisation of the second address. The second address is derivable from the tokenised second address only by the second data processing entity for implementing the second change of information stored at the second address (e.g. the banking system 300 in the case that the second address is a bank account or the shared ledger network in the case that the second address is a shared ledger address). In an embodiment, the second address is tokenised by encrypting it using a public encryption key associated with the second data processing entity and a suitable asymmetric encryption technique (various asymmetric encryption techniques are known in the art and will therefore not be described in detail here). The encrypted second address is therefore the token. The token can then only be decrypted (in order to obtain the second address) by the second data processing entity using a private key corresponding to the public key, the private key being known only to the second data processing entity (in particular, known only to the bank when the second address is a bank account or known only to the shared ledger network when the second address is a shared ledger address). The second data processing entity is therefore able to implement the second change of information stored at the second address (as indicated by the second information) whilst, at the same time, a third party who intercepts the signal transmitted from the device 100 cannot decrypt the tokenised second address (since they do not have the private key). The second address therefore remains known only to the sender (e.g. holder of device 100) and the second data processing entity which implements the second change of information. The risk of fraudulent activity being conducted using the second address is therefore reduced, thereby improving the security of the system. In this example, each public and private key pair used for encryption and decryption of the second address is associated with a respective bank (in the case that the second data processing entity is the banking system 300) or with a respective shared ledger (in the case that the second data processing entity is the shared ledger network).

The process ends at step 1202.

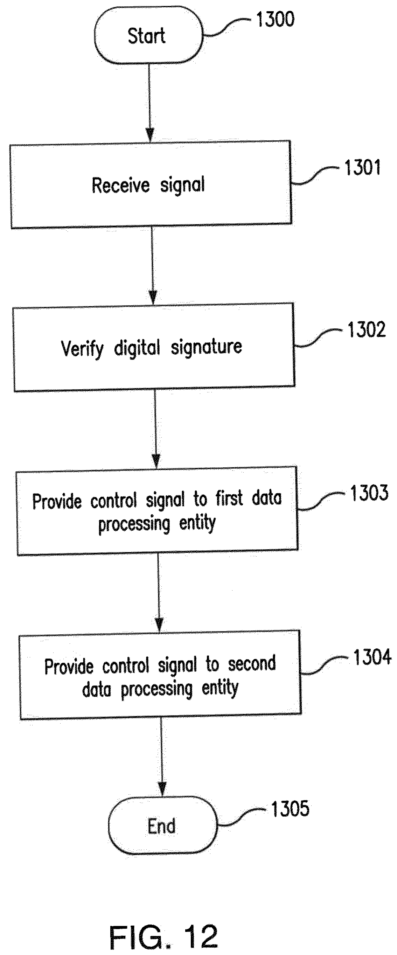

Figure 12 shows a process implemented by the information processing device 106A or 106B, according to an embodiment. In this embodiment, the information processing device 106A or 106B is the second information processing device mentioned in Figure 11 and the signal transmitted to the second information processing devices comprises message M₁ and includes both the first and second information.

The process starts at step 1300.

At step 1301, the communication interface 109 receives the signal transmitted by the communication interface 103 of device 100.

At step 1302, the processor 107 verifies the digital signature of the signal. The processor does this using the public key corresponding to the private key used by the information processing device 103 to create the digital signature. The public key is known in advance and is stored in the storage medium 110, for example (having previously been made available to the device 106A or 106B via a publicly available database or the like, as previously mentioned).

At step 1303, upon successful verification of the digital signature, the device 106A or 106B provides a control signal to the first data processing entity to control the first data processing entity to implement the first change of information at the first data processing entity (e.g. decreasing the funds recorded at a sending bank account of the banking system 300 or decreasing the funds recorded at a sending shared ledger address of the shared ledger network 301). Then, at step 1304, the device 106A or 106B provides a control signal the second data processing entity to control the second data processing entity to implement the second change of information at the second data processing entity (e.g. increasing the funds recorded at a receiving bank account of the banking system 300 or increasing the funds recorded at a receiving shared ledger address of the shared ledger network 301). It is noted that, if the verification of the digital signature is not successful (indicating that the signal was not genuinely created by the device 100 or that the content of the digitally signed message of the signal has been changed), the process ends without implementing steps 1303 and 1304. In this case, the communication interface 109 may transmit an error message back to the device 100 indicating that the requested transaction could not be completed.

The process ends at step 1305.

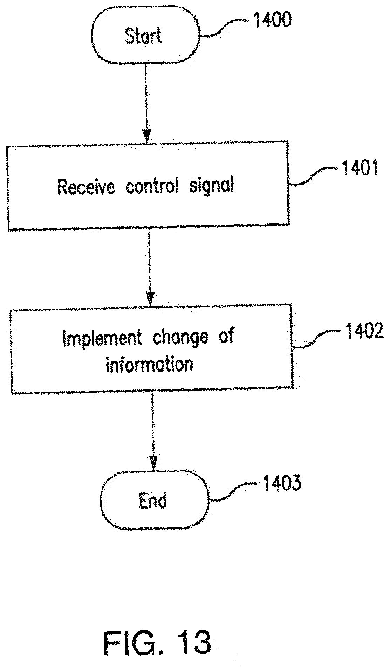

Figure 13 shows a further process implemented by the information processing device 106A or 106B, according to an embodiment. This process follows the process of Figure 12.

The process starts at step 1400.

At step 1401, the control signal is received. When the device is an information processing device of the first data processing entity (e.g. when the first data processing entity is the banking system 300 and the device is device 106A or when the first data processing entity is the shared ledger network 301 and the device is device 106B), the received control signal is that generated in step 1303. When the device is an information processing device of the second data processing entity (e.g. when the second data processing entity is the banking system 300 and the device is device 106A or when the second data processing entity is the shared ledger network 301 and the device is device 106B), the received control signal is that generated in step 1304.

At step 1402, when the device is an information processing device of the first data processing entity, in response to the control signal, the processor 107 de-tokenises the first address and implements the change of information located at the first address. For example, when the first data processing entity is the banking system 300 and the device is device 106A, the processor 107 de-tokenises the first address (e.g. using the private key associated with the bank with which the first address is associated). The device 106A then instructs the banking system 300 to implement the reduction in funds associated with the bank account identified by the de-tokenised first address (in the way as previously described). In another example, when the first data processing entity is the shared ledger network 301 and the device is device 106B, the processor 107 de-tokenises the first address (e.g. using the private key associated with the shared ledger with which the first address is associated). The device 106B then instructs the shared ledger network 301 to implement the reduction in funds associated with the shared ledger address identified by the de-tokenised first address (in the way as previously described).

At step 1402, when the device is an information processing device of the second data processing entity, in response to the control signal, the processor 107 de-tokenises the second address and implements the change of information located at the second address. For example, when the second data processing entity is the banking system 300 and the device is device 106A, the processor 107 de-tokenises the second address (e.g. using the private key associated with the bank with which the second address is associated). The device 106A then instructs the banking system 300 to implement the increase in funds associated with the bank account identified by the de-tokenised second address (in the way as previously described). In another example, when the second data processing entity is the shared ledger network 301 and the device is device 106B, the processor 107 de-tokenises the second address (e.g. using the private key associated with the shared ledger with which the second address is associated). The device 106B then instructs the shared ledger network 301 to implement the increase in funds associated with the shared ledger address identified by the de-tokenised second address (in the way as previously described).

The process ends at step 1403.

In this embodiment, each bank of the banking system 300 is associated with an instance of the device 106A and at least one node of the shared ledger network 301 is associated with an instance of the device 106B. A message transmitted to a bank of the banking system 300 or transmitted to a node of the shared ledger network 301 is always initially received the device 106A or 106B (respectively) and processed in the way as described in Figures 12 and 13. In other words, the devices 106A of the banking system 300 and device(s) 106B of the shared ledger network 301 handle the digital signature verification and de-tokenisation of addresses prior to the banking system 300 or shared ledger network 301 implementing a transaction. This helps ensure that all processes carried out by the banking system 300 and the shared ledger network 301 can be carried out as previously described based on the de-tokenised addresses.

For example, in Figure 3, the signal transmitted by device 100 at step 1201 is the message M₁, which is always first received by a device 106A associated with Bank A (the device 106A of Bank A is not shown in Figure 3). Following successful verification of the digital signature of the signal, the processor 107 outputs an internal control signal (as a first control signal) on the basis of which the processor 107 itself de-tokenises the first address. Device 106A is able to do this because it is associated with Bank A and the private key of Bank A for de-tokenising the first address is stored in the storage medium 110. The processor 107 also controls the communication interface 109 to output an external control signal (as a second control signal, not shown) to another instance of device 106A associated with Bank B (the further device 106A of Bank B is not shown in Figure 3). The second control signal is transmitted over the interbank network 306, for example. In response to the second control signal, the processor 107 of device 106A of Bank B de-tokenises the second address. Device 106A of Bank B is able to do this because it is associated with Bank B and the private key of Bank B for de-tokenising the second address is stored in the storage medium 110. The device 106A of Bank B then sends the de-tokenised second address back to the device 106A of Bank B via the interbank network 306 (security of the second address being maintained due to the inherent security of the interbank network 306). The banking system 300 may then implement the transfer of funds from User A's bank account at Bank A to User B's bank account at Bank B in the way as previously described, using the de-tokenised first and second addresses.

In another example, in Figure 4, the signal transmitted by device 100 at step 1201 is the message M₁, which is always first received by a device 106A associated with Bank A. Following successful verification of the digital signature of the signal, the processor 107 outputs an internal control signal (as a first control signal) on the basis of which the processor 107 itself de-tokenises the first address. Device 106A is able to do this because it is associated with Bank A and the private key of Bank A for de-tokenising the first address is stored in the storage medium 110. The processor 107 also controls the communication interface 109 to output an external control signal (as a second control signal) to a device 106B associated with the shared ledger network (the device 106B of the shared ledger network is not shown in Figure 4). In the example of Figure 4, the second control signal is message M₂. In response to the second control signal, the processor 107 of device 106B of the shared ledger network de-tokenises the second address. Device 106B of the shared ledger network is able to do this because it is associated with the shared ledger network and the private key of each shared ledger of the shared ledger network for de-tokenising shared ledger addresses is stored in the storage medium 110. The banking system 300 and shared ledger network 301 then implement the transfer of funds from User A's bank account at Bank A to User B on the shared ledger network in the way as previously described, using the de-tokenised first and second addresses.

In another example, in Figure 5, the signal transmitted by the device 100 at step 1201 is the message M₁, which is always first received by a device 106B associated with the shared ledger network 301. Following successful verification of the digital signature of the signal, the processor 107 outputs an internal control signal (as a first control signal) on the basis of which the processor 107 itself de-tokenises the first address. Device 106B of the shared ledger network is able to do this because it is associated with the shared ledger network and the private key of each shared ledger of the shared ledger network for de-tokenising shared ledger addresses is stored in the storage medium 110. The processor 107 also controls the communication interface 109 to output an external control signal (as a second control signal) to a device 106A associated with Bank B (the device 106A of Bank B is not shown in Figure 5). In the example of Figure 5, the second control signal is message M₂. In response to the second control signal, the processor 107 of device 106A of Bank B de-tokenises the second address. Device 106A of Bank B is able to do this because it is associated with Bank B and the private key of Bank B for de-tokenising the first address is stored in the storage medium 110. The banking system 300 and shared ledger network 301 then implement the transfer of funds from User A on the shared ledger network to User B's bank account at Bank B in the way as previously described, using the de-tokenised first and second addresses.

In another example, in Figure 6, the signal transmitted by the device 100 at step 1201 is the message M₁, which is always first received by a device 106B associated with the shared ledger network 301 (the device 106B of the shared ledger network is not shown in Figure 6). Following successful verification of the digital signature of the signal, the processor 107 outputs an internal control signal (as a first control signal) on the basis of which the processor 107 itself de-tokenises the first and second addresses. Device 106B of the shared ledger network is able to do this because it is associated with the shared ledger network and the private key of each shared ledger of the shared ledger network for de-tokenising shared ledger addresses is stored in the storage medium 110. The device 106B of the shared ledger network 301 then instructs the shared ledger network 301 to implement the transfer of funds from User A on the shared ledger network to User B on the shared ledger network in the way as previously described, using the de-tokenised first and second addresses.

In another example, in Figure 7, the signal transmitted by device 100 at step 1201 is the message M₁, which is always first received by a device 106A associated with Bank A. Following successful verification of the digital signature of the signal, the processor 107 outputs an internal control signal (as a first control signal) on the basis of which the processor 107 itself de-tokenises the first address. Device 106A is able to do this because it is associated with Bank A and the private key of Bank A for de-tokenising the first address is stored in the storage medium 110. The processor 107 also controls the communication interface 109 to output an external control signal (as a second control signal) to a device 106B associated with the shared ledger network. In the example of Figure 7, the second control signal is message M₂. In response to receiving the second control signal, the processor 107 of the device 106B controls the communication interface 109 to output a further external control signal (as a third control signal) to a device 106A associated with Bank B (the device 106A of Bank B is not shown in Figure 7). In the example of Figure 7, the third control signal is message M₃. In response to the third control signal, the processor 107 of device 106A of Bank B de-tokenises the second address. Device 106A of Bank B is able to do this because it is associated with Bank B and the private key of Bank B for de-tokenising the first address is stored in the storage medium 110. The banking system 300 and shared ledger network 301 then implement the transfer of funds from User A's bank account at Bank A to User B's bank account at Bank B in the way as previously described, using the de-tokenised first and second addresses.

As previously described, in embodiments, each address comprises two parts, a first part identifying the relevant participant of the data processing entity (e.g. unique bank identifier identifying a particular bank when the data processing entity is the banking system 300 or unique ledger identifier identifying a particular shared ledger when the data processing entity is the shared ledger network 301) and a second part identifying a unique address defined with respect to the identified participant (e.g. unique account identifier of the identified bank when the data processing entity is the banking system 300 or unique party identifier of the identified shared ledger when the data processing entity is the shared ledger network 301). In such embodiments, only the second part of the address is tokenised. This allows the relevant participant (e.g. bank or shared ledger) to be identified using the first, non-tokenised part of the address. Once the participant has been identified, the second part of the address can then be de-tokenised using the private key associated with the identified participant. The second part of the address is tokenised using the public key associated with the identified participant, the public key of each participant (e.g. bank or shared ledger) being made available to the sender in advance. The term "participant" should be understood to mean a sub-entity within a data processing entity which is identified by the first part of a source or destination address. In the examples above, a participant of the banking system 300 is a bank and a participant of the shared ledger network 301 is a shared ledger.

It will be appreciated that, in such embodiments, the first part of the source address is not tokenized, thereby allowing the bank or shared ledger with respect to which that source address is defined to be identified. This allows the payment request message (e.g. message M₁) to be forwarded by any other device to the relevant bank or shared ledger network hosting the relevant shared ledger. For example, the unique bank identifier of each bank (together with a network address of that bank) and the unique ledger identifier of each shared ledger (together with a network address of at least one node of the shared ledger network hosting that shared ledger) may be stored in a publicly accessibly database, thereby allowing any other device, upon receipt of the payment request message, to look up the unique bank identifier or unique ledger identifier defined in the first part of the source address in the publicly accessible database. This device may then forward the payment request message to the relevant bank or shared ledger network identified in the database. This allows increased flexibility in the way in which payment request messages may be provided to the relevant bank or shared ledger network, since any device or party which receives the payment request message (e.g. portable communication device of a user, point-of-sale device or even a different bank or shared ledger network) and is able to look up the non-tokenised first part of the source address in the publicly accessibly database may forward the payment request message to the bank or shared ledger network with respect to which the source address is defined. The payment request message may therefore be passed from the device which creates the payment request message to the relevant data processing entity for implementing the payment (e.g. banking system 300 or shared ledger network 301) via a series of transfers between any number of other devices (which may or may not include a device controlled by the payee).

In an embodiment, only the bank defined by the first part of the source address or the shared ledger network hosting the shared ledger defined by the first party of the source address is able to de-tokenise the second part of the source address (since, for example, only the bank or shared ledger network has the private key necessary to de-tokenise the second part of the source address). Similarly, only the bank defined by the first part of the destination address or the shared ledger network hosting the shared ledger defined by the first part of the destination address is able to de-tokenise the second part of the destination address (since, for example, only the bank or shared ledger network has the private key necessary to de-tokenise the second part of the destination address). Thus, a destination address included in a message transmitted between the banking system 300 and the shared ledger network 301 will be in tokenised form, since only the bank or shared ledger network data with respect to which the destination address is defined is able to de-tokenise the destination address. Thus, for example, in Figure 4, User B's shared ledger address as the destination address in message M₂ will be in tokenised form (de-tokenisable only by the shared ledger network 301). In Figure 5, User B's bank account at Bank B as the destination address in message M₂ will be in tokenised form (de-tokenisable only by Bank B). In Figure 7, User B's bank account at Bank B as the destination address in messages M₂ and M₃ will be in tokenised form (de-tokenisable only by Bank B).

In an embodiment, the bank defined by the first part of the source address or the shared ledger network hosting the shared ledger defined by the first part of the source address is the party which verifies the digital signature comprised in the payment request message. It does this by, for example, looking up in a publicly accessible database (which may be called the 'signature public key database', for example) the public key associated with the de-tokenised source address. Each source address is associated with a private / public key pair for allowing a payment request message comprising that source address to be digitally signed and verified. Upon creation of the private / public key pair, the public key is published (along with the source address) in the publicly accessibly database (the signature public key database) so as to allow verification of the digital signature by the bank defined by the first part of the source address or the shared ledger network hosting the shared ledger defined by the first part of the source address.

In an embodiment, there is no publically accessible signature public key database but, rather, each bank or shared ledger network has its own database, accessible only to the bank or nodes of the shared ledger network, comprising addresses and associated public keys from the private / public key pair created when each address was created. Each such database holds the public key needed to verify payment request messages in which the source or destination address is the address associated with the public key. The database of the bank or shared ledger network only holds addresses and their associated public keys where the first part of the address relates, respectively, to the bank holding the database or to the shared ledger hosted by the shared ledger network to which the shared ledger nodes belong.

As mentioned above, in an embodiment, the tokenisation comprises encryption (using a public key associated with the relevant participant) and the de-tokenisation comprises decryption (using a corresponding private key associated with the relevant participant). When two part addresses are used, it is thus the second part of the address which is encrypted and decrypted in order to tokenise and de-tokenise the address (using a public and private key associated with the relevant participant of the first or second data processing entity identifiable by the first part of the address). In order to further improve the security of the system, further, random information can be added to the second part of the address prior to encryption (this random information is referred to as "padding"). Each time an address is tokenised, different random information is added to the second part of the address prior to encryption, thereby resulting in a different token (for the same address) every time. The first or second data processing entity knows how the random information is added to the second part of the address prior to encryption. Thus, upon decrypting the received token, the first or second data processing entity is able to separate the second part of the address from the random information added by the sender, thereby enabling the second part of the address to be obtained. If the random information added to the second part of the address prior to decryption is sufficiently large and random, each tokenised address acts as a one time token which can only be used for a single transaction within a predetermined time period (i.e. the first or second data processing entity will reject a message containing a tokenised address which was previously received within the predetermined time period, for example). This further improves the security of the system, since it helps alleviate the risk of an unauthorised third party intercepting and resending messages containing tokenised address to the first or second data processing entity. The use of random padding to create a one time token in this way may be referred to as "dynamic" tokenisation (since each token created for a given address within the predetermined time period is expected to be different).

The use of "padding" also helps prevent tracking of the payer (e.g. a consumer) by the payee or another entity in the payment chain from payer to bank or shared ledger network. Tracking involves observing and recording the payments made by a particular payer so as to, for example, monitor buying behaviour. Such tracking can compromise a user's privacy. The use of "padding" therefore disrupts the relationship between a particular payer and the tokenised source address of that payer. In particular, without padding, the tokenised source address is the same each time and therefore, even though the payer cannot be identified (the source address is still tokenised), successive purchases by the same payer can be recognised. On the other hand, with "padding", two messages with the same source address token are no longer necessarily from the same source address. Tracking of a particular payer is therefore more difficult. It is noted that tracking prevention is not dependent on tokens being one-time tokens (i.e. tokens used only once during a predetermined time period). Rather, tokens may be repeated more regularly and, as long as the padding which results in variations in the token for a given source address remains random, the disruption of user tracking may still be realised.

In cases where tracking might be beneficial to the payer (and the user consents to such tracking), an identifier of the payer known to the payer and the payee (e.g. a customer loyalty number) may be included as additional information in the payment request message.

The above examples relate to the transmission of a signal (in the form of message M₁) to a device 106A or 106B of a data processing entity (in particular, a banking system 300 or shared ledger network 301). The message may be transmitted to the data processing entity via a series of transfers between any number of devices and involving any number of conversions of the message to different formats (as long as the information necessary to carry out the transaction is maintained and is identifiable in the message when it eventually reaches the relevant data processing entity for processing - in embodiments, this information comprises the source and destination addresses (in tokenised form), currency, payment amount, timestamp and digital signature). This is possible because the message M₁ is digitally signed by the sender (the digital signature being generated based on a message comprising all information necessary to carry out the transaction) and therefore any unauthorised alterations to the information necessary to carry out the transaction will result in the digital signature being non-verifiable (and the relevant data processing entity will therefore reject it). Furthermore, since the source and destination addresses are in tokenised form, an unauthorised user cannot determine the source or destination addresses. The result is a message M₁ which can be transmitted to the relevant data processing entity using any channel (even if that channel is non-secure) and via a series of transfers between any number of devices whilst at the same time, ensuring that the security and integrity of the system is maintained.

In an embodiment, the message describes an XML (Extensible Markup Language) or JSON (JavaScript Object Notation) document in which each instance of information necessary for carrying out the transaction (e.g. source and destination addresses (in tokenised form), currency, payment amount, timestamp and digital signature, in the case of message M₁) is defined in a respective predefined XML field. As long as each predefined XML / JSON field and the information content of that predefined XML / JSON remains identifiable in the message (thus enabling the digital signature generated using this information to be verified), then the message may take any number of different formats and may be transmitted between any number of devices between the device 100 and the relevant data processing entity (e.g. banking system 300 or shared ledger network 301).

In one example, the digitally signed message M₁ may be transmitted to another party (e.g. the party whom the creator of the message M₁ intends to pay) for that other party to transmit the message M₁ to the relevant payment processing entity at a later time. In this case, the message M₁ may comprise a second timestamp indicating the date and/or time at which the message M₁ will be accepted by the payment processing entity. The payment processing entity (in particular, the device 106A or 106B which must receive the message M₁ in order for it to be processed) will then not accept the message M₁ until after the date and/or time indicated by the second timestamp has occurred.

The use of messages comprising one or more tokenised addresses according to the present technique is not limited for use with payment request messages M₁.

For example, a tokenised address may be sent in a payment invitation message sent from a first user to a second user (such a message asking the second user to pay the first user using e.g. the banking system 300 or shared ledger network 301). In particular, if a first user of a first instance of device 100 wishes to request payment from a second user of a second instance of device 100, then the first user may use the first device to send a payment invitation message to the second device of the second user. The payment invitation message comprises the first user's destination address (in tokenised form), the currency, payment amount and a timestamp. The device 100 may be controlled to send a payment invitation message to a user via a similar arrangement as described in Figure 2 (except that, in this case, the "Payment Address" box 201 is replaced with a "Recipient" box in which the user enters information identifying the recipient of the payment invitation message). The "Recipient" may be identified using any suitable information, such as a telephone number, email address, social media username or the like. The recipient then receives the payment invitation message in a suitable format (e.g. Short Message Service (SMS) message, email, social media message or the like). The payment invitation message may be digitally signed by the sender in order to allow the receiver to verify the identify of the sender. The (tokenised) destination address included in the payment invitation message is the same as the (tokenised) source address included in the payment request message, this address being preconfigured by the user using the app (as previously described).

In another example, a tokenised address may be sent in a payment receipt message provided to a user by a payment processing entity (e.g. the banking system 300 or shared ledger network 301, the payment receipt message confirming that payment has been made). The payment receipt message comprises the destination address and source address (both in tokenised form), the currency, payment amount, a timestamp and a digital signature created by the bank or shared ledger node (e.g. a digital signature created by the processor 107 of device 106A using a private key associated with Bank A and stored in the storage medium 110 (if the original message M₁ is sent to Bank A) or created by the processor 107 of device 106B using a private key associated with the shared ledger concerned and stored in the storage medium 110 (if the original message M₁ is sent to the shared ledger network 301)).

The use of digitally signed messages containing tokenised addresses in the way as described allows a universal, open, social tier, representation-independent payment message standard to be provided. Such messages may be used in a wide range of existing and future payment use cases and may also be used as cash replacement.

Payment messages (e.g. message M₁) are created on an end-user payer's device 100 and sent by any route (dependent on payment use case) to a payment processing entity (e.g. banking system 300 or shared ledger network 301).

Example payment use cases include:
- Point-of-sale (when a user makes a purchase in a shop)
- Direct payment from one end-user to another
- Payer to payee over direct messaging (e.g. email, social media messaging, etc.)
- Website payments

In each of these cases, as long as the end user is able to create a digitally signed message (e.g. message M₁) comprising tokenised source and destination address and as long as this message (by whatever route) is able to reach the relevant payment processing entity (the information necessary for carrying out the transaction being maintained and being identifiable in the message), the payment can be made securely.

Regarding the point-of-sale use case, in an embodiment, when paying for goods in a store, the merchant's point-of-sale (PoS) device (not shown) sends a payment invitation message to the payer's device 100 (typically a personal device such as a smartphone). The payment invitation message comprises the amount to be paid, the currency, and the (tokenised) destination address to which the merchant wishes to be paid. The payer's device 100 then allows the payer to authenticate to indicate approval to authorize payment to the store (e.g. by the payer entering a passcode or providing biometric authentication (via a fingerprint or face recognition, for example)). Following authorization, the payer's device creates a payment request message in response to the payment invitation message.

The payment request message comprises: (i) the (tokenised) destination address specified in the payment invitation message (this being associated with the merchant); (ii) a (tokenised) source address selected by the payer and for which the device securely holds the private key (from the public / private key-pair created when the source address was created for digital signature creation and verification), the source address being tokenised using the public key associated with the bank or shared ledger with which it is associated; (iii) a payment amount and currency selected to provide that specified in the payment invitation message; and (iv) a timestamp added using a local clock time at the payer's device 100. The whole payment request message is then signed with the private key associated with the source address. The payer's device 100 then communicates the payment request message to the merchant's PoS device.

Upon receiving the payment request message, the PoS devices passes the payment request message to a preconfigured payment processor (not shown) of the merchant to be forwarded to the bank or shared ledger network associated with the source address to initiate payment. The payment is then completed as previously described. On completion of the payment process, an acknowledgement is returned to the merchant's PoS device from the preconfigured payment processor indicating success or otherwise of the payment. This information may then be communicated back to the payer's device 100 by the PoS device in the form of a payment receipt message (in the case that the payment was successful) or payment rejection message, (in the case that the payment was not successful). A payment rejection message contains the same information as a payment receipt message, except that a payment receipt message comprises information indicating that the payment was completed successfully whereas the payment rejection message comprises information indicating that the payment was not completed successfully.

Although, in the above-mentioned embodiment, the payer's device 100 is exemplified as a more complex device such as a smartphone or the like, in an embodiment, the payer is able to make a payment at a PoS device in the way as described using a less complex device such as a smart card or the like.

In an embodiment, the PoS device may facilitate the use of a less complex payer's device 100 by composing the payment request message on behalf of the payer's device 100. This reduces the required bandwidth needed for communication between the payer's device 100 and PoS device, thus speeding up the PoS experience for the payer. The payer's device 100 and PoS device may communicate via Near Field Communication (NFC), for example.

in this case, the payment invitation message supplied to the payer's device 100 comprises the (tokenised) destination address, the requested amount and currency and a PoS device created timestamp. The payer's device 100 is previously configured with and securely holds the source address associated with the payer, the private key (from the public / private key-pair created when the source address was created) and the public key associated with the bank or shared ledger with which the source address is associated (for tokenising the source address). When presented with the payment invitation message, the payer's device 100 creates a digital signature by digitally signing a message comprising the (tokenised) destination address specified in the payment invitation message (associated with the merchant), the (tokenised) source address (tokenised using the public key of the bank or shared ledger with which the source address is associated), the amount and currency as specified in the payment invitation and a timestamp copied from the payment invitation message. The digital signature is created using the private key from the public / private key-pair securely stored on the payer's device 100.

The payer's device 100 then communicates the tokenized source address and the created digital signature to the PoS device (using NFC, for example). The PoS device then assembles the payment request message using the received tokenised source address and digital signature and the information which it already has (i.e. the merchant's tokenized destination address, the payment amount and currency and the timestamp). The PoS device then passes this payment request message to the merchant's preconfigured payment processor, as described above. After the payment process has been completed, the PoS device receives back either a payment receipt message or a payment rejection message, as described above.

Thus, in the case of a less complex payer's device 100 such as a smart card, the amount of information which needs to be transmitted between the payer's device 100 and PoS device is reduced. This is because the payer's device 100 need only transmit the tokenised source address and digital signature to the PoS device (rather than the entire payment request message).

Regarding the website payments use case, in an embodiment, when paying for goods on a website, the merchant's website (or, more specifically, the server hosting the website) sends content to the payer, who accesses it via a web browser hosted by an operating system running on the payer's device 100 (e.g. a computer or a personal device such as a smartphone). This content describes the goods and their price. Included with the content is a payment invitation message. The browser displays this invitation as an option to buy the described product at the described price. The browser then awaits the payer to indicate that they wish to buy the displayed product.

Should the payer so indicate, the browser then creates a payment request message in response to the payment invitation message. That is, a payment request message is constructed in which the (tokenised) destination address is that specified in the payment invitation message (associated with the merchant), the source address is one selected by the payer for which the payer's device 100 securely holds the private key (from the public / private key-pair created when the source address was created) and which is tokenised using the public key associated with the bank or shared ledger to which it is associated, the amount and currency are selected as specified in the payment invitation and a timestamp is added from the local clock time for the payer's device. The whole payment request message is then digitally signed with the aforementioned private key.

The browser then sends the payment request message to the merchant website with other content (e.g. information identifying the product to be purchased) allowing it to be interpreted as a payment for the relevant item. The merchant website then passes this payment request message to the merchant's preconfigured payment processor to be forwarded to the bank or shared ledger network associated with the source address to initiate payment. On completion of the payment process, an acknowledgement is returned to the merchant's website from the payment processor indicating success or otherwise of the payment (i.e. the merchant's website receives either a payment receipt message or a payment rejection message). This information may then be communicated back to the payer by the website using any suitable means (e.g. a message indicating successful purchase of the item or a message indicating that purchase of the item was not successful).

In general, the use of payment request messages according to the present technique allows third parties to integrate payment message generation and understanding into their systems without the need for a business relationship with, service from or authentication from the relevant payment processing entity. This is because the message generation and transmission to the payment processing entity is separated from the processing of the payment itself (e.g. via the banking system 300 or shared ledger network 301). The ability to make electronic payments can therefore be implemented by third parties easily whilst maintain a system which is very secure.

Although the device 100 which creates the messages is exemplified as a smartphone, it will be appreciated that this device 100 may take any other suitable form. For example, the device 100 may be another personal device (e.g. tablet computer), a smart payment card (e.g. an EMV payment card) or any other electronic device running appropriate hardware and/or software. All that is necessary is for the storage medium 105 of the device 100 to :
- hold the private key for use in digitally signing the payment message (the private key is associated with the source address, for example, so that each source address is associated with a respective private key)
- hold the (non-tokenised) source address for the payer
- hold the public key for tokenising the source address (e.g. as made publicly available by the bank or shared ledger at which the source address is defined)

When making a payment, the device 100 is informed of the tokenised destination address and payment amount. The user may enter this information manually (e.g. using a user interface of the device 100 as exemplified in Figure 2) or, alternatively, this may be provided automatically to the device 100. For example, if the device 100 is a smart payment card (without an integrated user interface), then, during a payment card transaction with a point-of-sale terminal, the point-of-sale terminal sends the tokenised destination address and payment amount to the card. The card then assembles the payment message using this received information.

As previously mentioned, all messages sent by the user are digitally signed using a private key associated with the source address of the user. The payment processing entity with respect to which the source address is defined (e.g. banking system 300, in particular, the user's bank), or shared ledger network 301) has access to the public key associated with the private key in order to verify the digital signature of received messages.

As previously discussed, messages (including payment request messages such as message M₁, payment invitation messages and payment receipts) can be sent in any number of suitable formats (known to the respective sender and receiver) over any suitable communication channel (the communication channel including any number of intermediate devices located between the sender and the relevant payment processing entity), as long as the necessary information in these messages is maintained and remains identifiable (e.g. if the message eventually processed by the relevant payment processing entity comprises the relevant XML or JSON fields enabling the digital signature of the message to be verified and (if applicable) the payment to be made). For example, such messages may be sent as email attachments or may even be included in a message (e.g. an Apple iMessage ^{®} or similar) as an encoded URL. A message may change format multiple times during its journey from sender to payment processing entity (in accordance with the requirements of the payment use case).

The flexibility in message format allows many further applications to be envisaged.

In one example, messages (e.g. in the form of message M₁ in a suitable format) can be transmitted from one user to another in place of physical cash (the sending user will transmit the message M₁ to the receiving user who then transmits the message M₁ to the relevant payment processing entity). In one example, the devices 100 of the sending and receiving users form an ad hoc network using e.g. Bluetooth ^{®} or Wi-Fi ^{®} (as known in the art) in order to allow the tokenised destination address of the receiving user to be shared with the sending user and to allow a payment request message to be transmitted from the sending user to the receiving user. For example, such ad hoc networks may be proximity based (e.g. so that the sending and receiving user join the network when they are within a predetermined proximity to each other (as determined by physical contact between users' devices or by using Bluetooth ^{®} Beacons or the like, for example)). Furthermore, within an ad hoc network, the payer's sending device might identify the intended payee's receiving device by proximity. In this case, for example, the payer would not need to manually enter the payee destination address into their device 100 (e.g. as in Figure 2). Rather, the destination address is identified automatically to be that advertised by the first discovered payee device within the defined proximity on the ad hoc network. In this case, for example, the processor 101 controls the "Payment Address" box 201 shown in Figure 2 to be automatically populated with the identified destination address. The provides increased convenience to the user.

In another example, the creation, transmission and/or storage of messages (e.g. in the form of message M₁ in a suitable format) is incorporated into new and existing software applications to enable payments to be implemented using these applications. For example, merchant applications (implemented on websites or as Android ^{®} or iOS ^{®} apps) may incorporate the use of such messages to enable users to easily make purchases using the merchant application. In another example, existing generic office applications may incorporate the use of such messages to enable payments to be made, invited or confirmed (as a receipt) more easily. For example, spreadsheet applications may become purchasing systems (by allowing payment request messages to be created and transmitted using information in a spreadsheet), database management applications may become financial packages (by allowing payments to be requested, invited and confirmed using data in a database) and word processing applications may become invoice systems (by allowing a payment invitation message to be incorporated in the generated invoice).

In another example, a source address (e.g. shared ledger address or bank account) may be associated with a generic device such as a car, domestic appliance or electronic travel token (e.g. smartcard or the like)). Such a device would comprise an instance of device 100 which is configured to automatically generate a payment request message (e.g. in the form of message M₁) in a predetermined situation. For example, a car may automatically generate and send a payment request message when it travels on a toll road (as detected by the car's GNSS (Global Navigation Satellite System), for example), a domestic appliance such as a washing machine may automatically order laundry detergent (e.g. when the laundry detergent supply is low based on the number of washes completed since laundry detergent was previously ordered) and pay for this by generating and sending a payment request message and an electronic travel token may be configured to generate and transmit payment request messages only up to a certain total payment amount in a given time period (e.g. up to £100 on any given day).

In an embodiment, one or more limitations regarding payment (e.g. a limit on total spend in a given time period, a limit on the value of any one payment or a limit on the permitted payment destination addresses that may be paid) may be associated with payment request messages generated by the device 100. These limitation(s) may be preconfigured at the payment processing entity for processing the payment request messages so that, upon receiving a payment request message, the payment processing will only process the payment if the limitation identified in the message is adhered to. A limitation may be associated with a particular source address by including information indicative of the limitation in the publicly accessibly database relating the (de-tokenised) source address and the public key associated with that source address for verifying the digital signature included in the payment request message. Thus, when the device 106A or 106B retrieves the public key for verifying the digital signature, it also retrieves the information indicative of the payment limitation. If the requested payment contravenes the retrieved payment limitation, then the payment is not processed and the device 106A or 106B transmits a message back to the device 100 indicating that the payment could not be completed because it contravenes the limitation.

The payment limitation may be set for a predetermined time period (e.g. a total payment limit for one day). For example, if the limit on total spend in a given day is £100, then then the banking system or shared ledger network will reject a payment request message requesting a payment amount which would cause this limit to be exceed. Thus, for example, if the banking system or shared ledger network records that £80 has already been paid out from the source address on a given day (a record of this is stored in the storage medium 110 of the device 106A or 106B which receives the payment request message, for example), then a newly requested payment amount of £30 would be rejected (since £80 + £30 = £110, which is greater than the limit of £100). On the other hand, a newly requested payment amount of £15 would not be rejected (since £80 + £15 = £95, which is below the limit of £100). It will be appreciated that this is only an example and that any other types of information may be included in a payment request message (e.g. message M₁) in order to control the types of payments associated with the source address of that payment request message.

Although, in some of the above-mentioned embodiments, the present technique is applied as part of an electronic payments scheme, it will be appreciated that this is only an example and that the present technique may be applied to any other scheme involving the transfer of electronic messages from one party to another (e.g. over a computer network). Such electronic messages may be, for example, electronic communication messages (e.g. sent via an instant messaging platform), electronic messages comprising computer code (e.g. software updates or the like) or automatically generated transaction confirmation messages (e.g. electronic invoices, receipts, booking confirmations or the like). Other types of electronic message are also envisaged.

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a nontransitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A system comprising a first information processing device (100) configured to provide a signal to a second information processing device (106), the second information processing device and a third information processing device (106A, 106B), the signal comprising:
a digital signature associated with the first information processing device; and
at least one of:
information indicating a first change of information stored at a first address defined with respect to a first data processing entity and a tokenisation of the first address, the first address being derivable from the tokenised first address only by the first data processing entity for implementing the first change of information stored at the first address;
information indicating a second change of information stored at a second address defined with respect to a second data processing entity and a tokenisation of the second address, the second address being derivable from the tokenised second address only by the second data processing entity for implementing the second change of information stored at the second address; wherein:
the first data processing entity is a first payment processing entity, the first address defined with respect to the first data processing entity is an identifier of a first party to the first payment processing entity and the first change of information is a decrease in funds associated with the identified first party to the first payment processing entity;
the second data processing entity is a second payment processing entity, the second address defined with respect to the second payment processing entity is an identifier of a second party to the second payment processing entity and the second change of information is an increase in funds associated with the identified second party to the second payment processing entity; wherein:
the first payment processing entity is either a banking payments system or a shared ledger network, wherein:
when the first payment processing entity is a banking payments system, the first address defined with respect to the first payment processing entity comprises an identifier of a first bank of the banking payments system and an identifier of a first account of the identified first bank, and
when the first payment processing entity is a shared ledger network, the first address defined with respect to the first payment processing entity comprises an identifier of a first shared ledger and an identifier of a first party to the identified first shared ledger; and
the second payment processing entity is a banking payments system when the first payment processing entity is a shared ledger network and a shared ledger network when the first payment processing entity is a banking payments system, wherein:
when the second payment processing entity is a banking payments system, the second address defined with respect to the second payment processing entity comprises an identifier of a second bank of the banking payments system and an identifier of a second account of the identified second bank, and
when the second payment processing entity is a shared ledger network, the second address defined with respect to the second payment processing entity comprises an identifier of a second shared ledger and an identifier of a second party to the identified second shared ledger; wherein,
the second information processing device is configured to receive the signal from the first information processing device, verify the digital signature associated with the first information processing device; and, upon successful verification of the digital signature:
provide a control signal to the first data processing entity to control the first data processing entity to implement the first change of information at the first data processing entity, and
provide a control signal to the third information processing device to control the second payment processing entity to implement the second change of information at the second payment processing entity; and
wherein the third information processing devices is configured to:
receive a control signal from the second information processing device when the third information processing device is an information processing device of the first data processing entity, in response to the control signal, de-tokenise the first address and implement the change of information located at the first address; and
when the third information processing device is an information processing device of the second payment processing entity, in response to the control signal, de-tokenise the second address and implement the change of information located at the second address
wherein:
when the first payment processing entity is a banking payments system and the second payment processing entity is a shared ledger network:
the first address is tokenised by tokenising the identifier of the first account of the identified first bank using a public key associated with the identified first bank and is de-tokenised by the first payment processing entity using a private key of the identified first bank corresponding to the public key; and
the second address is tokenised by tokenising the identifier of the second party to the identified second shared ledger using a public key associated with the identified second shared ledger and is de-tokenised by the second payment processing entity using a private key of the identified second shared ledger corresponding to the public key;
when the first payment processing entity is a shared ledger network and the second payment processing entity is a banking payments system:
the first address is tokenised by tokenising the identifier of the first party to the identified first shared ledger using a public key associated with the identified first shared ledger and is de-tokenised by the first payment processing entity using a private key of the identified first shared ledger corresponding to the public key; and
the second address is tokenised by tokenising the identifier of the second account of the identified second bank using a public key associated with the identified second bank and is de-tokenised by the second payment processing entity using a private key of the identified second bank corresponding to the public key.

2. The system according to claim 1, wherein:
the signal comprises information indicating the increase in funds associated with the second party to the second payment processing entity and the tokenised identifier of the second party;
the first information processing device is associated with the second party to the second payment processing entity; and
the second information processing device is associated with the first party to the first payment processing entity.

3. The system according to claim 1, wherein: the signal comprises:
information indicating the decrease in funds associated with the first party to the first payment processing entity and the tokenised identifier of the first party, and
information indicating the increase in funds associated with the second party to the second payment processing entity and the tokenised identifier of the second party; and
the first information processing device is associated with the first party to the first payment processing entity.

4. The system according to claim 3, wherein the second information processing device is associated with the second party to the second payment processing entity.

5. The system according to claim 3, wherein the second information processing device is configured:
to control the first payment processing entity to decrease the funds associated with the first party to the first payment processing entity; and
to control the second payment processing entity to increase the funds associated with the second party to the second payment processing entity.

6. A method of operating a first information processing device (100), a second information processing device (106) and a third information processing device (106A, 106B), the method comprising controlling the first information processing device to provide (1201) a signal to a second information processing device, the signal comprising:
a digital signature associated with the first information processing device; and at least one of:
information indicating a first change of information stored at a first address defined with respect to a first data processing entity and a tokenisation of the first address, the first address being derivable from the tokenised first address only by the first data processing entity for implementing the first change of information stored at the first address;
information indicating a second change of information stored at a second address defined with respect to a second data processing entity and a tokenisation of the second address, the second address being derivable from the tokenised second address only by the second data processing entity for implementing the second change of information stored at the second address;
wherein:
the first data processing entity is a first payment processing entity, the first address defined with respect to the first data processing entity is an identifier of a first party to the first payment processing entity and the first change of information is a decrease in funds associated with the identified first party to the first payment processing entity;
the second data processing entity is a second payment processing entity, the second address defined with respect to the second payment processing entity is an identifier of a second party to the second payment processing entity and the second change of information is an increase in funds associated with the identified second party to the second payment processing entity;
wherein:
the first payment processing entity is either a banking payments system or a shared ledger network, wherein:
when the first payment processing entity is a banking payments system, the first address defined with respect to the first payment processing entity comprises an identifier of a first bank of the banking payments system and an identifier of a first account of the identified first bank, and
when the first payment processing entity is a shared ledger network, the first address defined with respect to the first payment processing entity comprises an identifier of a first shared ledger and an identifier of a first party to the identified first shared ledger; and
the second payment processing entity is a banking payments system when the first payment processing entity is a shared ledger network and a shared ledger network when the first payment processing entity is a banking payments system, wherein:
when the second payment processing entity is a banking payments system, the second address defined with respect to the second payment processing entity comprises an identifier of a second bank of the banking payments system and an identifier of a second account of the identified second bank, and
when the second payment processing entity is a shared ledger network, the second address defined with respect to the second payment processing entity comprises an identifier of a second shared ledger and an identifier of a second party to the identified second shared ledger;
wherein the method further comprises controlling the second information processing device to:
receive (1301) the signal from the first information processing device;
verify (1302) the digital signature associated with the first information processing device; and, upon successful verification of the digital signature:
provide (1303) a control signal to the first data processing entity to control the first data processing entity to implement the first change of information at the first data processing entity, and
provide (1304) a control signal to the third information processing device to control the second payment processing entity to implement the second change of information at the second payment processing entity; and
wherein the method further comprises controlling the third information processing device to:
receive (1401) the control signal from the second information processing device, when the third information processing device is an information processing device of the first data processing entity, in response to the control signal (1402), de-tokenise the first address and implement the change of information located at the first address; and
when the third information processing device is an information processing device of the second payment processing entity, in response to the control signal (1402), de-tokenise the second address and implement the change of information located at the second address;
wherein:
when the first payment processing entity is a banking payments system and the second payment processing entity is a shared ledger network:
the first address is tokenised by tokenising the identifier of the first account of the identified first bank using a public key associated with the identified first bank and is de-tokenised by the first payment processing entity using a private key of the identified first bank corresponding to the public key; and
the second address is tokenised by tokenising the identifier of the second party to the identified second shared ledger using a public key associated with the identified second shared ledger and is de-tokenised by the second payment processing entity using a private key of the identified second shared ledger corresponding to the public key;
when the first payment processing entity is a shared ledger network and the second payment processing entity is a banking payments system:
the first address is tokenised by tokenising the identifier of the first party to the identified first shared ledger using a public key associated with the identified first shared ledger and is de-tokenised by the first payment processing entity using a private key of the identified first shared ledger corresponding to the public key; and
the second address is tokenised by tokenising the identifier of the second account of the identified second bank using a public key associated with the identified second bank and is de-tokenised by the second payment processing entity using a private key of identified second bank corresponding to the public key.

7. A computer program comprising instructions which, when the_computer program is executed by a system, cause the system to carry out the method of claim 6.

8. A computer-readable storage medium comprising instructions which, when executed byasystem, cause the system to carry out the method of claim 6.

## Patentansprüche

1. System, das eine erste Informationsverarbeitungsvorrichtung (100) umfasst, die dafür konfiguriert ist, ein Signal an eine zweite Informationsverarbeitungsvorrichtung (106), die zweite Informationsverarbeitungsvorrichtung und eine dritte Informationsverarbeitungsvorrichtung (106A, 106B) zu liefern, wobei das Signal Folgendes umfasst:
eine digitale Signatur, die der ersten Informationsverarbeitungsvorrichtung zugeordnet ist, und mindestens eines von:
Informationen, die eine erste Änderung von Informationen anzeigen, die an einer ersten Adresse gespeichert sind, die in Bezug auf eine erste Datenverarbeitungsentität definiert ist, und eine Tokenisierung der ersten Adresse, wobei die erste Adresse nur durch die erste Datenverarbeitungsentität von der tokenisierten ersten Adresse ableitbar ist, um die erste Änderung der an der ersten Adresse gespeicherten Informationen zu implementieren;
Informationen, die eine zweite Änderung von Informationen anzeigen, die an einer zweiten Adresse gespeichert sind, die in Bezug auf eine zweite Datenverarbeitungsentität definiert ist, und eine Tokenisierung der zweiten Adresse, wobei die zweite Adresse nur durch die zweite Datenverarbeitungsentität aus der tokenisierten zweiten Adresse ableitbar ist, um die zweite Änderung der an der zweiten Adresse gespeicherten Informationen zu implementieren; wobei:
die erste Datenverarbeitungsentität eine erste Zahlungsverarbeitungsentität ist, die erste Adresse, die in Bezug auf die erste Datenverarbeitungsentität definiert ist, eine Kennung einer ersten Partei der ersten Zahlungsverarbeitungsentität ist und die erste Änderung von Informationen eine Abnahme von Geldmitteln ist, die der identifizierten ersten Partei der ersten Zahlungsverarbeitungsentität zugeordnet ist,
die zweite Datenverarbeitungsentität eine zweite Zahlungsverarbeitungsentität ist, die zweite Adresse, die in Bezug auf die zweite Zahlungsverarbeitungsentität definiert ist, eine Kennung einer zweiten Partei der zweiten Zahlungsverarbeitungsentität ist und die zweite Änderung der Informationen eine Erhöhung der Geldmittel ist, die der identifizierten zweiten Partei der zweiten Zahlungsverarbeitungsentität zugeordnet ist, wobei:
die erste Zahlungsverarbeitungsentität entweder ein Bankzahlungssystem oder ein Shared-Ledger-Netzwerk ist, wobei:
wenn die erste Zahlungsverarbeitungsentität ein Bankzahlungssystem ist, die erste Adresse, die in Bezug auf die erste Zahlungsverarbeitungsentität definiert ist, eine Kennung einer ersten Bank des Bankzahlungssystems und eine Kennung eines ersten Kontos der identifizierten ersten Bank umfasst, und
wenn die erste Zahlungsverarbeitungsentität ein Shared-Ledger-Netzwerk ist, die erste Adresse, die in Bezug auf die erste Zahlungsverarbeitungsentität definiert ist, eine Kennung eines ersten Shared-Ledger und eine Kennung einer ersten Partei des identifizierten ersten Shared-Ledger umfasst, und
die zweite Zahlungsverarbeitungsentität ein Bankzahlungssystem ist, wenn die erste Zahlungsverarbeitungsentität ein Shared-Ledger-Netzwerk ist, und ein Shared-Ledger-Netzwerk ist, wenn die erste Zahlungsverarbeitungsentität ein Bankzahlungssystem ist, wobei:
wenn die zweite Zahlungsverarbeitungsentität ein Bankzahlungssystem ist, die zweite Adresse, die in Bezug auf die zweite Zahlungsverarbeitungsentität definiert ist, eine Kennung einer zweiten Bank des Bankzahlungssystems und eine Kennung eines zweiten Kontos der identifizierten zweiten Bank umfasst, und
wenn die zweite Zahlungsverarbeitungsentität ein Shared-Ledger-Netzwerk ist, die zweite Adresse, die in Bezug auf die zweite Zahlungsverarbeitungsentität definiert ist, eine Kennung eines zweiten Shared-Ledger und eine Kennung einer zweiten Partei des identifizierten zweiten Shared-Ledger umfasst, wobei
die zweite Informationsverarbeitungsvorrichtung dafür konfiguriert ist, das Signal von der ersten Informationsverarbeitungsvorrichtung zu empfangen, die der ersten Informationsverarbeitungsvorrichtung zugeordnete digitale Signatur zu verifizieren und bei erfolgreicher Verifizierung der digitalen Signatur Folgendes auszuführen:
Bereitstellen eines Steuersignals für die erste Datenverarbeitungsentität, um die erste Datenverarbeitungsentität zu steuern, um die erste Änderung der Informationen bei der ersten Datenverarbeitungsentität zu implementieren, und
Bereitstellen eines Steuersignals für die dritte Informationsverarbeitungsvorrichtung, um die zweite Zahlungsverarbeitungsentität zu steuern, um die zweite Änderung der Informationen bei der zweiten Zahlungsverarbeitungsentität zu implementieren; und
wobei die dritte Informationsverarbeitungsvorrichtung für Folgendes konfiguriert ist:
Empfangen eines Steuersignals von der zweiten Informationsverarbeitungsvorrichtung, wenn die dritte Informationsverarbeitungsvorrichtung eine Informationsverarbeitungsvorrichtung der ersten Datenverarbeitungsentität ist, als Reaktion auf das Steuersignal die erste Adresse zu enttokenisieren und die Änderung der Informationen, die sich an der ersten Adresse befinden, zu implementieren; und
wenn die dritte Informationsverarbeitungsvorrichtung eine Informationsverarbeitungsvorrichtung der zweiten Zahlungsverarbeitungsentität ist, als Reaktion auf das Steuersignal die zweite Adresse zu enttokenisieren und die Änderung der Informationen, die sich an der zweiten Adresse befinden, zu implementieren,
wobei:
wenn es sich bei der ersten Zahlungsverarbeitungsentität um ein Bankzahlungssystem und bei der zweiten Zahlungsverarbeitungsentität um ein Shared-Ledger-Netzwerk handelt:
die erste Adresse durch Tokenisierung der Kennung des ersten Kontos der identifizierten ersten Bank unter Verwendung eines öffentlichen Schlüssels, der der identifizierten ersten Bank zugeordnet ist, tokenisiert wird und von der ersten Zahlungsverarbeitungsentität unter Verwendung eines privaten Schlüssels der identifizierten ersten Bank, der dem öffentlichen Schlüssel entspricht, de-tokenisiert wird; und
die zweite Adresse tokenisiert wird, indem die Kennung der zweiten Partei dem identifizierten zweiten Shared-Ledger unter Verwendung eines öffentlichen Schlüssels, der dem identifizierten zweiten Shared-Ledger zugeordnet ist, zugeordnet wird und von der zweiten Zahlungsverarbeitungsentität unter Verwendung eines privaten Schlüssels des identifizierten zweiten Shared-Ledgers, der dem öffentlichen Schlüssel entspricht, de-tokenisiert wird;
wenn es sich bei der ersten Zahlungsverarbeitungsentität um ein Shared-Ledger-Netzwerk und bei der zweiten Zahlungsverarbeitungsentität um ein Bankzahlungssystem handelt:
die erste Adresse tokenisiert wird, indem die Kennung der ersten Partei dem identifizierten ersten Shared-Ledger unter Verwendung eines öffentlichen Schlüssels, der dem identifizierten ersten Shared-Ledger zugeordnet ist, zugeordnet wird und von der ersten Zahlungsverarbeitungsentität unter Verwendung eines privaten Schlüssels des identifizierten ersten Shared-Ledgers, der dem öffentlichen Schlüssel entspricht, de-tokenisiert wird; und
die zweite Adresse tokenisiert wird, indem die Kennung des zweiten Kontos der identifizierten zweiten Bank unter Verwendung eines öffentlichen Schlüssels, der der identifizierten zweiten Bank zugeordnet ist, zugeordnet wird und von der zweiten Zahlungsverarbeitungsentität unter Verwendung eines privaten Schlüssels der identifizierten zweiten Bank, der dem öffentlichen Schlüssel entspricht, de-tokenisiert wird.

2. System nach Anspruch 1, wobei:
das Signal Informationen umfasst, die die Erhöhung der der zweiten Partei zuzuordnenden Geldmittel an die zweite Zahlungsverarbeitungsentität und die tokenisierte Kennung der zweiten Partei anzeigen,
die erste Informationsverarbeitungsvorrichtung der zweiten Partei der zweiten Zahlungsverarbeitungsentität zugeordnet ist, und
die zweite Informationsverarbeitungsvorrichtung der ersten Partei der ersten Zahlungsverarbeitungsentität zugeordnet ist.

3. System nach Anspruch 1, wobei: das Signal Folgendes umfasst:
Informationen, die die Abnahme der Geldmittel anzeigen, die der ersten Partei der ersten Zahlungsverarbeitungsentität zugeordnet sind, und die tokenisierte Kennung der ersten Partei, und
Informationen, die die Zunahme der Geldmittel anzeigen, die der zweiten Partei der zweiten Zahlungsverarbeitungsentität zugeordnet sind, und die tokenisierte Kennung der zweiten Partei, und
die erste Informationsverarbeitungsvorrichtung der ersten Partei der ersten Zahlungsverarbeitungsentität zugeordnet ist.

4. System nach Anspruch 3, wobei die zweite
Informationsverarbeitungsvorrichtung der zweiten Partei der zweiten Zahlungsverarbeitungsentität zugeordnet ist.

5. System nach Anspruch 3, wobei die zweite
Informationsverarbeitungsvorrichtung für Folgendes konfiguriert ist:
Steuern der ersten Zahlungsverarbeitungsentität, um die der ersten Partei zuzuordnenden Geldmittel an die erste Zahlungsverarbeitungsentität zu verringern; und
Steuern der zweiten Zahlungsverarbeitungsentität, um die der zweiten Partei zuzuordnenden Geldmittel an die zweite Zahlungsverarbeitungsentität zu erhöhen.

6. Verfahren zum Betreiben einer ersten
Informationsverarbeitungsvorrichtung (100), einer zweiten Informationsverarbeitungsvorrichtung (106) und einer dritten Informationsverarbeitungsvorrichtung (106A, 106B), wobei das Verfahren die Steuerung der ersten Informationsverarbeitungsvorrichtung umfasst, um ein Signal an eine zweite Informationsverarbeitungsvorrichtung zu liefern (1201), wobei das Signal Folgendes umfasst:
eine digitale Signatur, die der ersten Informationsverarbeitungsvorrichtung zugeordnet ist, und mindestens eines von:
Informationen, die eine erste Änderung von Informationen anzeigen, die an einer ersten Adresse gespeichert sind, die in Bezug auf eine erste Datenverarbeitungsentität definiert ist, und eine Tokenisierung der ersten Adresse, wobei die erste Adresse nur durch die erste Datenverarbeitungsentität von der tokenisierten ersten Adresse ableitbar ist, um die erste Änderung der an der ersten Adresse gespeicherten Informationen zu implementieren;
Informationen, die eine zweite Änderung von Informationen anzeigen, die an einer zweiten Adresse gespeichert sind, die in Bezug auf eine zweite Datenverarbeitungsentität definiert ist, und eine Tokenisierung der zweiten Adresse, wobei die zweite Adresse nur durch die zweite Datenverarbeitungsentität aus der tokenisierten zweiten Adresse ableitbar ist, um die zweite Änderung der an der zweiten Adresse gespeicherten Informationen zu implementieren;
wobei:
die erste Datenverarbeitungsentität eine erste Zahlungsverarbeitungsentität ist, die erste Adresse, die in Bezug auf die erste Datenverarbeitungsentität definiert ist, eine Kennung einer ersten Partei der ersten Zahlungsverarbeitungsentität ist und die erste Änderung von Informationen eine Abnahme von Geldmitteln ist, die der identifizierten ersten Partei der ersten Zahlungsverarbeitungsentität zugeordnet ist,
die zweite Datenverarbeitungsentität eine zweite Zahlungsverarbeitungsentität ist, die zweite Adresse, die in Bezug auf die zweite Zahlungsverarbeitungsentität definiert ist, eine Kennung einer zweiten Partei der zweiten Zahlungsverarbeitungsentität ist und die zweite Änderung der Informationen eine Erhöhung der Geldmittel ist, die der identifizierten zweiten Partei der zweiten Zahlungsverarbeitungsentität zugeordnet ist,
wobei:
die erste Zahlungsverarbeitungsentität entweder ein Bankzahlungssystem oder ein Shared-Ledger-Netzwerk ist, wobei:
wenn die erste Zahlungsverarbeitungsentität ein Bankzahlungssystem ist, die erste Adresse, die in Bezug auf die erste Zahlungsverarbeitungsentität definiert ist, eine Kennung einer ersten Bank des Bankzahlungssystems und eine Kennung eines ersten Kontos der identifizierten ersten Bank umfasst, und
wenn die erste Zahlungsverarbeitungsentität ein Shared-Ledger-Netzwerk ist, die erste Adresse, die in Bezug auf die erste Zahlungsverarbeitungsentität definiert ist, eine Kennung eines ersten Shared-Ledger und eine Kennung einer ersten Partei des identifizierten ersten Shared-Ledger umfasst, und
die zweite Zahlungsverarbeitungsentität ein Bankzahlungssystem ist, wenn die erste Zahlungsverarbeitungsentität ein Shared-Ledger-Netzwerk ist, und ein Shared-Ledger-Netzwerk ist, wenn die erste Zahlungsverarbeitungsentität ein Bankzahlungssystem ist, wobei:
wenn die zweite Zahlungsverarbeitungsentität ein Bankzahlungssystem ist, die zweite Adresse, die in Bezug auf die zweite Zahlungsverarbeitungsentität definiert ist, eine Kennung einer zweiten Bank des Bankzahlungssystems und eine Kennung eines zweiten Kontos der identifizierten zweiten Bank umfasst, und
wenn die zweite Zahlungsverarbeitungsentität ein Shared-Ledger-Netzwerk ist, die zweite Adresse, die in Bezug auf die zweite Zahlungsverarbeitungsentität definiert ist, eine Kennung eines zweiten Shared-Ledger und eine Kennung einer zweiten Partei des identifizierten zweiten Shared-Ledger umfasst,
wobei das Verfahren ferner die Steuerung der zweiten Informationsverarbeitungsvorrichtung für Folgendes umfasst:
Empfangen (1301) der Signale von der ersten Vorrichtung zur Verarbeitung von Informationen,
Überprüfen (1302) der der ersten Informationsverarbeitungsvorrichtung zugeordneten digitalen Signatur, und bei erfolgreicher Überprüfung der digitalen Signatur:
Bereitstellen (1303) eines Steuersignals für die erste datenverarbeitende Entität, um die erste datenverarbeitende Entität zu steuern, um die erste Änderung der Informationen bei der ersten datenverarbeitenden Entität zu implementieren, und
Bereitstellen (1304) eines Steuersignals für die dritte Informationsverarbeitungsvorrichtung, um die zweite Zahlungsverarbeitungsentität zu steuern, um die zweite Änderung der Informationen bei der zweiten Zahlungsverarbeitungsentität zu implementieren; und
wobei das Verfahren ferner die Steuerung der dritten Informationsverarbeitungsvorrichtung für Folgendes umfasst:
Empfangen (1401) des Steuersignals von der zweiten Informationsverarbeitungsvorrichtung, wenn die dritte Informationsverarbeitungsvorrichtung eine Informationsverarbeitungsvorrichtung der ersten Datenverarbeitungsentität ist, als Reaktion auf das Steuersignal (1402), Enttokenisieren der ersten Adresse und Implementieren der Änderung der Informationen, die sich an der ersten Adresse befinden, und
wenn die dritte Informationsverarbeitungsvorrichtung eine Informationsverarbeitungsvorrichtung der zweiten Zahlungsverarbeitungsentität ist, als Reaktion auf das Steuersignal (1402) die zweite Adresse zu enttokenisieren und die Änderung der Informationen, die sich an der zweiten Adresse befinden, zu implementieren,
wobei:
wenn es sich bei der ersten Zahlungsverarbeitungsentität um ein Bankzahlungssystem und bei der zweiten Zahlungsverarbeitungsentität um ein Shared-Ledger-Netzwerk handelt:
die erste Adresse durch Tokenisierung der Kennung des ersten Kontos der identifizierten ersten Bank unter Verwendung eines öffentlichen Schlüssels, der der identifizierten ersten Bank zugeordnet ist, tokenisiert wird und von der ersten Zahlungsverarbeitungsentität unter Verwendung eines privaten Schlüssels der identifizierten ersten Bank, der dem öffentlichen Schlüssel entspricht, de-tokenisiert wird; und
die zweite Adresse tokenisiert wird, indem die Kennung der zweiten Partei dem identifizierten zweiten Shared-Ledger unter Verwendung eines öffentlichen Schlüssels, der dem identifizierten zweiten Shared-Ledger zugeordnet ist, zugeordnet wird und von der zweiten Zahlungsverarbeitungsentität unter Verwendung eines privaten Schlüssels des identifizierten zweiten Shared-Ledgers, der dem öffentlichen Schlüssel entspricht, de-tokenisiert wird;
wenn es sich bei der ersten Zahlungsverarbeitungsentität um ein Shared-Ledger-Netzwerk und bei der zweiten Zahlungsverarbeitungsentität um ein Bankzahlungssystem handelt:
die erste Adresse tokenisiert wird, indem die Kennung der ersten Partei dem identifizierten ersten Shared-Ledger unter Verwendung eines öffentlichen Schlüssels, der dem identifizierten ersten Shared-Ledger zugeordnet ist, zugeordnet wird und von der ersten Zahlungsverarbeitungsentität unter Verwendung eines privaten Schlüssels des identifizierten ersten Shared-Ledgers, der dem öffentlichen Schlüssel entspricht, de-tokenisiert wird; und
die zweite Adresse tokenisiert wird, indem die Kennung des zweiten Kontos der identifizierten zweiten Bank unter Verwendung eines öffentlichen Schlüssels, der der identifizierten zweiten Bank zugeordnet ist, zugeordnet wird und von der zweiten Zahlungsverarbeitungsentität unter Verwendung eines privaten Schlüssels der identifizierten zweiten Bank, der dem öffentlichen Schlüssel entspricht, de-tokenisiert wird.

7. Computerprogramm, das Anweisungen umfasst, die, wenn das Computerprogramm von einem System ausgeführt wird, das System veranlassen, das Verfahren nach Anspruch 6 auszuführen.

8. Computerlesbares Speichermedium, das Befehle umfasst, die, wenn sie von einem System ausgeführt werden, das System veranlassen, das Verfahren nach Anspruch 6 auszuführen.

## Revendications

1. Système comportant un premier dispositif de traitement des informations (100) configuré pour fournir un signal à un deuxième dispositif de traitement des informations (106), le deuxième dispositif de traitement des informations et un troisième dispositif de traitement des informations (106A, 106B), le signal comportant :
une signature numérique associée au premier dispositif de traitement des informations ; et
au moins des informations parmi :
des informations indiquant un premier changement d'informations stockées au niveau d'une première adresse définie par rapport à une première entité de traitement de données et une segmentation en jetons de la première adresse, la première adresse ne pouvant être dérivée de la première adresse segmentée en jetons que par la première entité de traitement de données à des fins de mise en œuvre du premier changement d'informations stockées au niveau de la première adresse ;
des informations indiquant un deuxième changement d'informations stockées au niveau d'une deuxième adresse définie par rapport à une deuxième entité de traitement de données et une segmentation en jetons de la deuxième adresse, la deuxième adresse ne pouvant être dérivée de la deuxième adresse segmentée en jetons que par la deuxième entité de traitement de données à des fins de mise en œuvre du deuxième changement d'informations stockées au niveau de la deuxième adresse ; dans lequel :
la première entité de traitement de données est une première entité de traitement de paiement, la première adresse définie par rapport à la première entité de traitement de données est un identifiant d'une première partie de la première entité de traitement de paiement et le premier changement d'informations est une diminution des fonds associés à la première partie identifiée de la première entité de traitement de paiement ;
la deuxième entité de traitement de données est une deuxième entité de traitement de paiement, la deuxième adresse définie par rapport à la deuxième entité de traitement de paiement est un identifiant d'une deuxième partie de la deuxième entité de traitement de paiement et le deuxième changement d'informations est une augmentation des fonds associés à la deuxième partie identifiée de la deuxième entité de traitement de paiement ; dans lequel :
la première entité de traitement de paiement est soit un système de paiements bancaires, soit un réseau de grand livre partagé, dans lequel :
quand la première entité de traitement de paiement est un système de paiements bancaires, la première adresse définie par rapport à la première entité de traitement de paiement comporte un identifiant d'une première banque du système de paiements bancaires et un identifiant d'un premier compte de la première banque identifiée, et
quand la première entité de traitement de paiement est un réseau de grand livre partagé, la première adresse définie par rapport à la première entité de traitement de paiement comporte un identifiant d'un premier grand livre partagé et un identifiant d'une première partie du premier grand livre partagé identifié ; et
la deuxième entité de traitement de paiement est un système de paiements bancaires quand la première entité de traitement de paiement est un réseau de grand livre partagé et un réseau de grand livre partagé quand la première entité de traitement de paiement est un système de paiements bancaires, dans lequel :
quand la deuxième entité de traitement de paiement est un système de paiements bancaires, la deuxième adresse définie par rapport à la deuxième entité de paiement comporte un identifiant d'une deuxième banque du système de paiements bancaires et un identifiant d'un deuxième compte de la deuxième banque identifiée, et
quand la deuxième entité de traitement de paiement est un réseau de grand livre partagé, la deuxième adresse définie par rapport à la deuxième entité de traitement de paiement comporte un identifiant d'un deuxième grand livre partagé et un identifiant d'une deuxième partie du deuxième grand livre partagé identifié ; dans lequel,
le deuxième dispositif de traitement des informations est configuré pour recevoir le signal en provenance du premier dispositif de traitement des informations, vérifier la signature numérique associée au premier dispositif de traitement des informations ; et, après vérification réussie de la signature numérique :
fournir un signal de commande à la première entité de traitement de données pour commander la première entité de traitement de données afin de mettre en œuvre le premier changement d'informations au niveau de la première entité de traitement de données, et
fournir un signal de commande au troisième dispositif de traitement des informations pour commander la deuxième entité de traitement de paiement afin de mettre en œuvre le deuxième changement d'informations au niveau de la deuxième entité de traitement de paiement ; et
dans lequel le troisième dispositif de traitement des informations est configuré pour :
recevoir un signal de commande en provenance du deuxième dispositif de traitement des informations quand le troisième dispositif de traitement des informations est un dispositif de traitement des informations de la première entité de traitement de données, en réponse au signal de commande, inverser la segmentation en jetons de la première adresse et mettre en œuvre le changement d'informations se trouvant au niveau de la première adresse ; et
quand le troisième dispositif de traitement des informations est un dispositif de traitement des informations de la deuxième entité de traitement de paiement, en réponse au signal de commande, inverser la segmentation en jetons de la deuxième adresse et mettre en œuvre le changement d'informations se trouvant au niveau de la deuxième adresse,
dans lequel :
quand la première entité de traitement de paiement est un système de paiements bancaires et quand la deuxième entité de traitement de paiement est un réseau de grand livre partagé :
la première adresse est segmentée en jetons par une segmentation en jetons de l'identifiant du premier compte de la première banque identifiée à l'aide d'une clé publique associée à la première banque identifiée et la segmentation en jetons est inversée par la première entité de traitement de paiement à l'aide d'une clé privée de la première banque identifiée correspondant à la clé publique ; et
la deuxième adresse est segmentée en jetons par une segmentation en jetons de l'identifiant de la deuxième partie du deuxième grand livre partagé identifié à l'aide d'une clé publique associée au deuxième grand livre partagé identifié et la segmentation en jetons est inversée par la deuxième entité de traitement à l'aide d'une clé privée du deuxième grand livre partagé identifié correspondant à la clé publique ;
quand la première entité de traitement de paiement est un réseau de grand livre partagé et quand la deuxième entité de traitement de paiement est un système de paiements bancaires :
la première adresse est segmentée en jetons par une segmentation en jetons de l'identifiant de la première partie du premier grand livre partagé identifié à l'aide d'une clé publique associée au premier grand livre partagé identifié et la segmentation en jetons est inversée par la première entité de traitement de paiement à l'aide d'une clé privée du premier grand livre partagé identifié correspondant à la clé publique ; et
la deuxième adresse est segmentée en jetons par une segmentation en jetons de l'identifiant du deuxième compte de la deuxième banque identifiée à l'aide d'une clé publique associée à la deuxième banque identifiée et la segmentation en jetons est inversée par la deuxième entité de traitement de paiement à l'aide d'une clé privée de la deuxième banque identifiée correspondant à la clé publique.

2. Système selon la revendication 1, dans lequel :
le signal comporte des informations indiquant l'augmentation des fonds associés à la deuxième partie de la deuxième entité de traitement de paiement et à l'identifiant segmenté en jetons de la deuxième partie ;
le premier dispositif de traitement des informations est associé à la deuxième partie de la deuxième entité de traitement de paiement ; et
le deuxième dispositif de traitement des informations est associé à la première partie de la première entité de traitement de paiement.

3. Système selon la revendication 1, dans lequel le signal comporte :
des informations indiquant la diminution des fonds associés à la première partie de la première entité de traitement de paiement et à l'identifiant segmenté en jetons de la première partie, et
des informations indiquant l'augmentation des fonds associés à la deuxième partie de la deuxième entité de traitement de paiement et à l'identifiant segmenté en jetons de la deuxième partie ; et
le premier dispositif de traitement des informations est associé à la première partie de la première entité de traitement de paiement.

4. Système selon la revendication 3, dans lequel le deuxième dispositif de traitement des informations est associé à la deuxième partie de la deuxième entité de traitement de paiement.

5. Système selon la revendication 3, dans lequel le deuxième dispositif de traitement des informations est configuré :
pour commander la première entité de traitement de paiement afin de réduire les fonds associés à la première partie de la première entité de traitement de paiement ; et
pour commander la deuxième entité de traitement de paiement afin d'augmenter les fonds associés à la deuxième partie de la deuxième entité de traitement de paiement.

6. Procédé de fonctionnement d'un premier dispositif de traitement des informations (100), d'un deuxième dispositif de traitement des informations (106) et d'un troisième dispositif de traitement des informations (106A, 106B), le procédé comportant l'étape consistant à commander le premier dispositif de traitement des informations pour fournir (1201) un signal à un deuxième dispositif de traitement des informations, le signal comportant :
une signature numérique associée au premier dispositif de traitement des informations ; et au moins des informations parmi :
des informations indiquant un premier changement d'informations stockées au niveau d'une première adresse définie par rapport à une première entité de traitement de données et une segmentation en jetons de la première adresse, la première adresse ne pouvant être dérivée de la première adresse segmentée en jetons que par la première entité de traitement de données à des fins de mise en oeuvre du premier changement d'informations stockées au niveau de la première adresse ;
des informations indiquant un deuxième changement d'informations stockées au niveau d'une deuxième adresse définie par rapport à une deuxième entité de traitement de données et une segmentation en jetons de la deuxième adresse, la deuxième adresse ne pouvant être dérivée de la deuxième adresse segmentée en jetons que par la deuxième entité de traitement de données à des fins de mise en œuvre du deuxième changement d'informations stockées au niveau de la deuxième adresse ;
dans lequel :
la première entité de traitement de données est une première entité de traitement de paiement, la première adresse définie par rapport à la première entité de traitement de données est un identifiant d'une première partie de la première entité de traitement de paiement et le premier changement d'informations est une diminution des fonds associés à la première partie identifiée de la première entité de traitement de paiement ;
la deuxième entité de traitement de données est une deuxième entité de traitement de paiement, la deuxième adresse définie par rapport à la deuxième entité de traitement de paiement est un identifiant d'une deuxième partie de la deuxième entité de traitement de paiement et le deuxième changement d'informations est une augmentation des fonds associés à la deuxième partie identifiée de la deuxième entité de traitement de paiement ;
dans lequel :
la première entité de traitement de paiement est soit un système de paiements bancaires, soit un réseau de grand livre partagé, dans lequel :
quand la première entité de traitement de paiement est un système de paiements bancaires, la première adresse définie par rapport à la première entité de traitement de paiement comporte un identifiant d'une première banque du système de paiements bancaires et un identifiant d'un premier compte de la première banque identifiée, et
quand la première entité de traitement de paiement est un réseau de grand livre partagé, la première adresse définie par rapport à la première entité de traitement de paiement comporte un identifiant d'un premier grand livre partagé et un identifiant d'une première partie du premier grand livre partagé identifié ; et
la deuxième entité de traitement de paiement est un système de paiements bancaires quand la première entité de traitement de paiement est un réseau de grand livre partagé et un réseau de grand livre partagé quand la première entité de traitement de paiement est un système de paiements bancaires, dans lequel :
quand la deuxième entité de traitement de paiement est un système de paiements bancaires, la deuxième adresse définie par rapport à la deuxième entité de traitement de paiement comporte un identifiant d'une deuxième banque du système de paiements bancaires et un identifiant d'un deuxième compte de la deuxième banque identifiée, et
quand la deuxième entité de traitement de paiement est un réseau de grand livre partagé, la deuxième adresse définie par rapport à la deuxième entité de paiement comporte un identifiant d'un deuxième grand livre partagé et un identifiant d'une deuxième partie du deuxième grand livre partagé identifié ;
dans lequel le procédé comporte par ailleurs l'étape consistant à commander le deuxième dispositif de traitement des informations pour :
recevoir (1301) le signal en provenance du premier dispositif de traitement des informations ;
vérifier (1302) la signature numérique associée au premier dispositif de traitement des informations ; et, après vérification réussie de la signature numérique :
fournir (1303) un signal de commande à la première entité de traitement de données pour commander la première entité de traitement de données afin de mettre en œuvre le premier changement d'informations au niveau de la première entité de traitement de données, et
fournir (1304) un signal de commande au troisième dispositif de traitement des informations pour commander la deuxième entité de traitement de paiement afin de mettre en œuvre le deuxième changement d'informations au niveau de la deuxième entité de traitement de paiement ; et
dans lequel le procédé comporte par ailleurs l'étape consistant à commander le troisième dispositif de traitement des informations pour :
recevoir (1401) le signal de commande en provenance du deuxième dispositif de traitement des informations, quand le troisième dispositif de traitement des informations est un dispositif de traitement des informations de la première entité de traitement de données, en réponse au signal de commande (1402), inverser la segmentation en jetons de la première adresse et mettre en œuvre le changement d'informations se trouvant au niveau de la première adresse ; et
quand le troisième dispositif de traitement des informations est un dispositif de traitement des informations de la deuxième entité de traitement de paiement, en réponse au signal de commande (1402), inverser la segmentation en jetons de la deuxième adresse et mettre en œuvre le changement d'informations se trouvant au niveau de la deuxième adresse ;
dans lequel :
quand la première entité de traitement de paiement est un système de paiements bancaires et quand la deuxième entité de traitement de paiement est un réseau de grand livre partagé :
la première adresse est segmentée en jetons par une segmentation en jetons de l'identifiant du premier compte de la première banque identifiée à l'aide d'une clé publique associée à la première banque identifiée et la segmentation en jetons est inversée par la première entité de traitement de paiement à l'aide d'une clé privée de la première banque identifiée correspondant à la clé publique ; et
la deuxième adresse est segmentée en jetons par une segmentation en jetons de l'identifiant de la deuxième partie du deuxième grand livre partagé identifié à l'aide d'une clé publique associée au deuxième grand livre partagé identifié et la segmentation en jetons est inversée par la deuxième entité de traitement de paiement à l'aide d'une clé privée du deuxième grand livre partagé identifié correspondant à la clé publique ;
quand la première entité de traitement de paiement est un réseau de grand livre partagé et quand la deuxième entité de traitement de paiement est un système de paiements bancaires :
la première adresse est segmentée en jetons par une segmentation en jetons de l'identifiant de la première partie du premier grand livre partagé identifié à l'aide d'une clé publique associée au premier grand livre partagé identifié et la segmentation en jetons est inversée par la première entité de traitement de paiement à l'aide d'une clé privée du premier grand livre partagé identifié correspondant à la clé publique ; et
la deuxième adresse est segmentée en jetons par une segmentation en jetons de l'identifiant du deuxième compte de la deuxième banque identifiée à l'aide d'une clé publique associée à la deuxième banque identifiée et la segmentation en jetons est inversée par la deuxième entité de traitement de paiement à l'aide d'une clé privée de la deuxième banque identifiée correspondant à la clé publique.

7. Programme informatique comportant des instructions qui, quand le programme informatique est exécuté par un système, amène le système à exécuter le procédé selon la revendication 6.

8. Support de stockage lisible par ordinateur comportant des instructions qui, quand elles sont exécutées par un système, amènent le système à exécuter le procédé selon la revendication 6.
